# EUROPEAN PATENT APPLICATION

(11) **EP 4 761 361 A1**
(43) Date of publication of application: **17.06.2026**
(21) Application number: 23948685.5
(22) Date of filing: 11.08.2023
(51) Int. Cl.: H04W 36/08

(54) **INTEGRATION METHOD FOR INTEGRATED ACCESS AND BACKHAUL NODE, AND APPARATUS**

(71) Applicant: 1FINITY Inc., Kawasaki-shi, Kanagawa 211-8588 (JP)
(72) Inventor: YI, Su, Beijing 100022 (CN); LI, Guorong, Beijing 100022 (CN)
(74) Representative: Haseltine Lake Kempner LLP
(86) International application number: PCT/CN2023/112456
(87) International publication number: WO 2025/035240

(57) **Abstract**

The embodiments of the present disclosure provide a method and apparatus for IAB (integrated access and backhaul)-node integration, the method comprising: a DU of the IAB-node is configured by an OAM or an MT of the IAB-node is configured by an RRC-terminating IAB-donor-CU with a base station identity of an F1-terminating IAB-donor-CU; and the DU of the IAB-node performs F1 setup with the F1-terminating IAB-donor-CU according to the base station identity. Thereby, a problem of IAB-node integration is solved, so that the IAB-MT and a collocated IAB-DU are able to be integrated onto different donor-CUs, which improves flexibility of a network configuration.

## Description

### TECHNICAL FIELD

The present disclosure relates to the field of communications.

### BACKGROUND

Integrated access and backhaul (IAB) implements a radio relay function in a next generation radio access network (NG-RAN). This relay node is called an IAB-node, and supports both access and backhaul (BH) simultaneously via 5G new radio (NR). All IAB-nodes connect to an IAB-donor node via one or more hops. These multi-hop connections form a Directed Acyclic Graph (DAG) topological structure which takes the IAB-donor node as a root node. The IAB-donor node is responsible for performing centralized resource management, topology management and routing management in an IAB network topology.

The IAB-node supports functions of a gNB-DU (distributed unit) which is called an IAB-DU, and may serve ordinary user equipment (UEs) and IAB child nodes. The IAB-node simultaneously supports some functions of a UE and may be called an IAB-MT (mobile termination). The IAB-MT may support functions of a UE, e.g. functions of a physical layer, an access stratum (AS), radio resource control (RRC) and non-access stratum (NAS), and may connect to an IAB parent node. Terminating node at a network side is called an IAB-donor, which provides network access for the IAB-MT or UE via a backhaul or access link. The IAB-donor is further divided into an IAB-donor-CU (central unit) and an IAB-donor-DU. The IAB-DU and the IAB-donor-CU are connected via an F1 interface. In a standalone networking scenario, the gNB and the IAB-donor-CU are connected via an Xn interface.

To support multi-hop routing/forwarding of a packet, the IAB introduces a Backhaul Adaptation Protocol (BAP) sublayer. The BAP sublayer is located above a radio link control (RLC) sublayer and below an Internet Protocol (IP) layer, and supports functions such as selection of a packet destination node and a path, routing/forwarding of the packet, bearer mapping, flow control feedback, and backhaul link failure notification, etc.

In a multi-hop scenario, in order to achieve relay forwarding of a packet, the IAB-node needs to determine a destination node to which the packet arrives, and then determines a next-hop node corresponding to the destination node according to a routing table and transmits the packet. In the above scenario, the IAB-donor-CU (called a donor-CU or a CU or a gNB-CU for short), via F1AP (F1 application protocol) signaling, configures the IAB-node with mapping from each F1-U (F1 user plane) tunnel, each non-UE-associated FlAP message, each UE-associated FlAP message and each non-F1 data (traffic) for uplink transmission initiated by the IAB-node to a BAP routing identity. The IAB-node determines BAP routing identities corresponding to different types of uplink IP packets initiated from the IAB-node according to routing identity mapping information, and encapsulates BAP subheaders including BAP routing identity information for these uplink IP packets. The IAB-donor-CU configures the IAB-donor-DU (called a donor-DU for short) with mapping from different types of downlink packets to a BAP routing identity via the F1AP signaling. The IAB-donor-DU determines BAP routing identities corresponding to the received downlink IP packets according to the routing identity mapping information, and encapsulates BAP subheaders including BAP routing identity information for these downlink IP packets.

The BAP routing identity includes a destination BAP address and a path identity from the IAB-node to the IAB-donor-DU. The BAP address is also called a DESTINATION in a BAP header. Each IAB-node and IAB-donor-DU are configured with a BAP address.

Integration procedure of the IAB-node is also called a startup procedure, and refers to a procedure in which an IAB-MT accesses to a network and acquires IAB related configuration information, and starts up some functions of a DU to provide services for a UE. By taking an integration procedure of the IAB-node under standalone networking as an example, it may be divided into three phases.

A first phase, the IAB-MT accesses to a network. In this phase, the IAB-MT as an ordinary UE connects to the network, this procedure substantially reuses an initial access procedure of the ordinary UE.

A second phase, BH RLC channel establishment and routing update. In this phase, RRC may configure a default BH RLC channel and a default BAP routing identity for non-F1-U traffic. It may be possible for the IAB-donor-CU to further set up an additional BH RLC channel for the IAB-MT in this phase for subsequent data transmissions. The IAB-donor-CU performs routing configurations for a newly integrated IAB-node, an IAB-donor-DU, a parent node of the newly integrated IAB-node, and all intermediate IAB-nodes for the IAB-donor-DU. In addition, this phase further comprises an IP address allocation procedure for the newly integrated IAB-node.

A third phase is IAB-DU startup. The IAB-DU uses the IP addresses obtained in the second phase to initiate SCTP (Stream Control Transmission Protocol) connection setup and F1 connection setup procedures with the IAB-donor-CU. After that, the IAB-node may begin to provide air interface services for the UE.

The above is a brief description, and for details, related arts are referred to.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that in the existing IAB-node integration procedures, both an MT and a DU of the IAB-node are terminated at the same donor-CU. This cannot achieve flexibility of a mobile IAB-node and cannot quickly support topological adaptation between donors of the IAB-node. Therefore, how to support that the MT and the DU of the IAB-node are integrated to different donor-CUs is a research target in the industry.

For the above problem or similar problems or similar problems in other scenarios, the embodiments of the present disclosure provide a method and apparatus for IAB-node integration.

According to an aspect of the embodiments of the present disclosure, an apparatus for IAB-node integration is provided, configured in the IAB-node, the IAB-node comprising an MT (mobile termination) and a DU (distributed unit), wherein,
the DU of the IAB-node is configured by an OAM or the MT of the IAB-node is configured by an RRC-terminating IAB-donor-CU with a base station identity of an F1-terminating IAB-donor-CU; and
the DU of the IAB-node performs F1 setup with the F1-terminating IAB-donor-CU according to the base station identity.

According to another aspect of the embodiments of the present disclosure, an apparatus for IAB-node integration is provided, configured in an RRC-terminating IAB-donor, the RRC-terminating IAB-donor comprising a CU and a DU, wherein,
the RRC-terminating IAB-donor-CU transmits first information to an MT of the IAB-node, the first information including identity information of the IAB-node and/or identity information of the RRC-terminating IAB-donor, so that a DU of the IAB-node transmits second information related to the first information to the F1-terminating IAB-donor.

According to another aspect of the embodiments of the present disclosure, an apparatus for IAB-node integration is provided, configured in an RRC-terminating IAB-donor, the RRC-terminating IAB-donor comprising a CU and a DU, wherein,
the RRC-terminating IAB-donor-CU receives a first RRC message transmitted by an MT of the IAB-node, the first RRC message including identity information of an F1-terminating IAB-donor; the RRC-terminating IAB-donor transmits identity information of the IAB-node to the F1-terminating IAB-donor according to the first RRC message.

According to a further aspect of the embodiments of the present disclosure, an apparatus for IAB-node integration is provided, configured in an F1-terminating IAB-donor, the F1-terminating IAB-donor comprising a CU and a DU, wherein,
the F1-terminating IAB-donor-CU receives second information transmitted by a DU of the IAB-node, the second information being related to first information, the first information including identity information of the IAB-node and/or identity information of an RRC-terminating IAB-donor.

According to another aspect of the embodiments of the present disclosure, an apparatus for IAB-node integration is provided, configured in an RRC-terminating IAB-donor, the RRC-terminating IAB-donor comprising a CU (central unit) and a DU (distributed unit), wherein,
the RRC-terminating IAB-donor-CU determines a base station identity of an F1-terminating IAB-donor-CU for the IAB-node; and
the RRC-terminating IAB-donor-CU transmits the base station identity of the F1-terminating IAB-donor-CU to an MT of the IAB-node, so that a DU of the IAB-node performs F1 setup with the F1-terminating IAB-donor-CU according to the base station identity.

According to another aspect of the embodiments of the present disclosure, an apparatus for IAB-node integration is provided, configured in an F1-terminating IAB-donor, the F1-terminating IAB-donor comprising a CU (central unit) and a DU (distributed unit), wherein,
the F1-terminating IAB-donor receives a first Xn message transmitted by an RRC-terminating IAB-donor-CU, the first Xn message including a UE XnAP ID generated by the RRC-terminating IAB-donor for the IAB-node and/or a BAP address of the IAB-node.

According to a further aspect of the embodiments of the present disclosure, a setting apparatus is provided, configured in an IAB-node, the IAB-node comprising an MT and a DU, wherein,
the MT transmits an RRC setup complete message to an RRC-terminating IAB-donor, the RRC setup complete message including third information, the third information indicating a mobile IAB capability of the IAB-node, so that the RRC-terminating IAB-donor selects an AMF that supports mobile IAB.

According to a further aspect of the embodiments of the present disclosure, a setting apparatus is provided, configured in an IAB-node, the IAB-node comprising an MT and a DU, wherein,
the MT receives a broadcast message transmitted by an RRC-terminating IAB-donor, the broadcast message indicating a cell that supports mobile IAB; and
the MT performs cell selection according to the broadcast message.

One of the advantageous effects of the embodiments of the present disclosure lies in that according to the embodiments of the present disclosure, a problem of IAB-node integration is solved, so that the IAB-MT and a collocated IAB-DU are able to be integrated to different donor-CUs, which improves flexibility of a network configuration.

Referring to the later description and drawings, specific implementations of the present disclosure are disclosed in detail, indicating a mode that a principle of the present disclosure may be adopted. It should be understood that the implementations of the present disclosure are not limited in terms of a scope. Within the scope of the spirit and terms of the attached claims, the implementations of the present disclosure comprise many changes, modifications and equivalents.

Features that are described and/or illustrated for one implementation may be used in the same way or in a similar way in one or more other implementations, be combined with features in other implementations or replace the features in other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels denote corresponding components in several drawings and may be used to indicate corresponding components used in more than one implementation.

The included drawings are used to provide further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of an example of an IAB network topology structure;
FIG. 2 is a schematic diagram of an integration procedure of a mobile IAB-node in the embodiments of the present disclosure;
FIG. 3 is a schematic diagram of a method for IAB-node integration in the embodiments of a first aspect of the present disclosure;
FIG. 4 is a schematic diagram of a process for setting an IAB-DU in an IAB-node integration procedure;
FIG. 5 is another schematic diagram of a process for setting an IAB-DU in an IAB-node integration procedure;
FIG. 6a and FIG. 6b are schematic diagrams of two other examples of a method for IAB-node integration in the embodiments of a first aspect of the present disclosure;
FIG. 7a and FIG. 7b are schematic diagrams of two further examples of a method for IAB-node integration in the embodiments of a first aspect of the present disclosure;
FIG. 8 is a schematic diagram of a method for IAB-node integration in the embodiments of a second aspect of the present disclosure;
FIG. 9 is a further schematic diagram of a process for setting an IAB-DU in an IAB-node integration procedure;
FIG. 10 is another schematic diagram of a method for IAB-node integration in the embodiments of a second aspect of the present disclosure;
FIG. 11a and FIG. 11b are schematic diagrams of two further examples of a method for IAB-node integration in the embodiments of a second aspect of the present disclosure;
FIG. 12 is a schematic diagram of a setting method in the embodiments of the present disclosure;
FIG. 13 is another schematic diagram of a setting method in the embodiments of the present disclosure;
FIG. 14 is a schematic diagram of an apparatus for IAB-node integration in the embodiments of the present disclosure;
FIG. 15 is another schematic diagram of an apparatus for IAB-node integration in the embodiments of the present disclosure;
FIG. 16 is another schematic diagram of an apparatus for IAB-node integration in the embodiments of the present disclosure;
FIG. 17 is another schematic diagram of an apparatus for IAB-node integration in the embodiments of the present disclosure;
FIG. 18 is another schematic diagram of an apparatus for IAB-node integration in the embodiments of the present disclosure;
FIG. 19 is a schematic diagram of a setting apparatus in the embodiments of the present disclosure;
FIG. 20 is another schematic diagram of a setting apparatus in the embodiments of the present disclosure;
FIG. 21 is a schematic diagram of an IAB-node in the embodiments of the present disclosure;
FIG. 22 is a schematic diagram of an IAB-donor node in the embodiments of the present disclosure.

### DETAILED DESCRIPTION

Referring to the drawings, through the following Specification, the aforementioned and other features in the present disclosure will become obvious. The Specification and the drawings specifically disclose specific implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the listed associated terms. The terms "include", "comprise" and "have", etc. refer to the presence of stated features, elements, component or assemblies, but do not exclude the presence or addition of one or more other features, elements, component or assemblies.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "network device" e.g. refers to a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and moreover, may further include a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "User Equipment (UE)" e.g. refers to a device that accesses a communication network and receives network services via a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as the Internet of Things (IoT), the terminal equipment may further be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

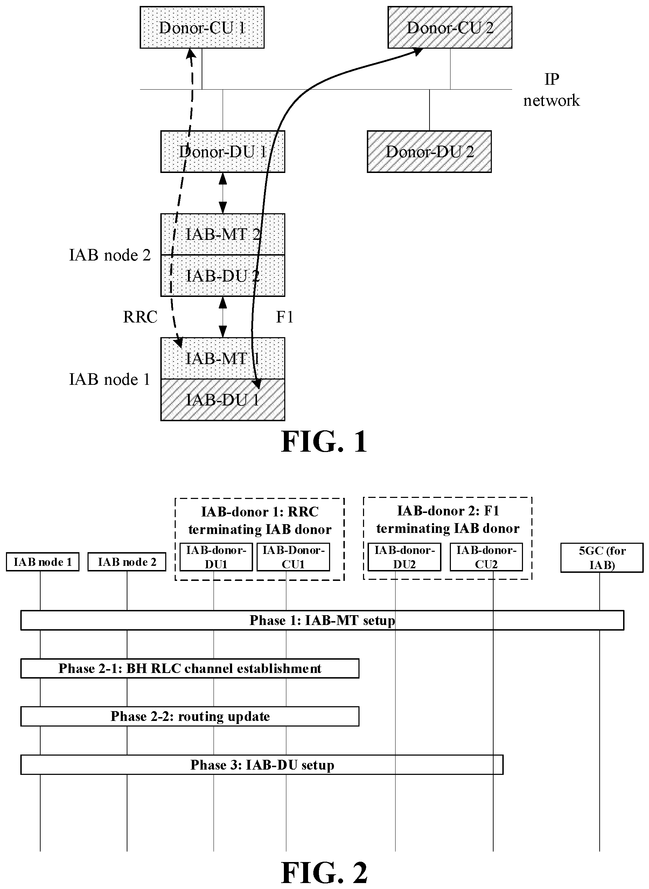

FIG. 1 is a schematic diagram of an example of an IAB network topology structure, showing a situation in which an MT and a DU of one IAB are terminated at different donor-CUs.

The inventor finds that the mobility of mobile IAB (mIAB) or mobile relay in a relatively large area faces a challenge. That is, when it is in the process of moving, based on the needs for network coverage and QoS support, an F1-terminating donor and a non-F1-terminating donor of an IAB-node may be different, i.e., the MT and the DU of the IAB are terminated at different IAB-donor-CUs.

The F1-terminating node refers to a donor-CU that terminates an F1 interface of an IAB-node, such as donor-CU2 shown in FIG. 1, and in FIG. 1, if the IAB-DU1 is terminated to the donor-CU2 via an F1 connection, the donor-CU2 is an F1-terminating node of the IAB-node 1. Since the IAB-DU is configured by this CU, the F1-terminating donor-CU may also be called a donor-CU of an IAB-DU.

The non-F1-terminating node refers to a CU that does not terminate the F1 interface of the IAB-node and has a donor function, such as donor-CU1 shown in FIG. 1. Since there exists an RRC connection between the non-F1-terminating node and the IAB-MT, the non-F1-terminating node may also be called a donor node of a serving IAB-MT, and the non-F1-terminating donor CU is also called a donor CU of the IAB-MT or may also be called an RRC-terminating donor-CU of the IAB-node.

In FIG. 1, the IAB-MT1 connects only to the parent IAB-node 2, then connects to the donor-DU1 and the donor-CU1. The IAB-DU1 sets up an F1 connection with the donor-CU2, but a path that this F1 connection traverses is passing the IAB-node2 and the donor-DU1, then finally reaching to the donor-CU2.

Since an RRC interface and an F1 interface of the IAB-node 1 are terminated at different donor-CUs, the IAB-node 1 is a boundary IAB-node.

The inventor finds that in the existing IAB-node integration procedures, both an MT and a DU of the IAB-node are terminated at the same donor-CU. This cannot achieve flexibility of a mobile IAB-node and cannot quickly support topological adaptation between donors of the IAB-node. Therefore, how to support that the MT and the DU of the IAB-node are integrating to different donor-CUs needs to be defined. That is, the network integration scenario shown in FIG. 1 is supported, so that the boundary IAB-node is also able to perform integration. However, currently, an integration procedure in which the MT and the DU of the IAB-node connect to different donor-CUs has not been defined.

In the embodiments of the present disclosure, by taking 5G multi-hop IAB network deployment as an example, multiple UEs connect to an IAB-donor via a multi-hop IAB-node and finally access to a 5G network. An IAB-node to which a UE is connected is mobile.

FIG. 2 is a schematic diagram of an integration procedure of a mobile IAB-node in the embodiments of the present disclosure, showing a situation of network integration of a general IAB-node (the IAB-node 1 in FIG. 2). As shown in FIG. 2, the IAB-MT and the IAB-DU of the IAB-node 1 are integrated to different IAB-donors. In FIG. 2, the IAB-donor 1 is an RRC-terminating IAB-donor, i.e., a donor to which the MT is connected; the IAB-donor 2 is an F1-terminating IAB-donor, i.e., a donor to which the DU is connected.

In FIG. 2, the IAB-MT of the IAB-node 1 performs network access in the first phase. In this phase, the IAB-MT as an ordinary UE connects to the network, this procedure substantially reuses an initial access procedure of an ordinary UE. The donor accessed by the IAB-MT is the donor-CU1. In the second phase, the donor-CU1 performs RRC configuration for the IAB-MT, comprising BH RLC channel establishment, etc., the donor-CU1 further performs routing update for an IAB-node between the IAB-node 1 and the donor-DU1, such as the IAB-node 2, which is used to support BAP routing from the IAB-node 1 to the donor-DU1. In an IAB-DU setup procedure of the third phase, the IAB-DU of the IAB-node 1 sets up an F1 connection to the donor-CU2, i.e., performs F1 setup.

Various implementations of the present disclosure are described below with reference to the drawings. These implementations are only exemplary and are not limitations to the present disclosure. In the following description, "if...", "in a case where..." and "when...", etc. have the same meaning, and may be interchangeable.

### Embodiments of a first aspect

The embodiments of the present disclosure provide a method for IAB-node integration, applicable to the scenario shown in FIG. 2.

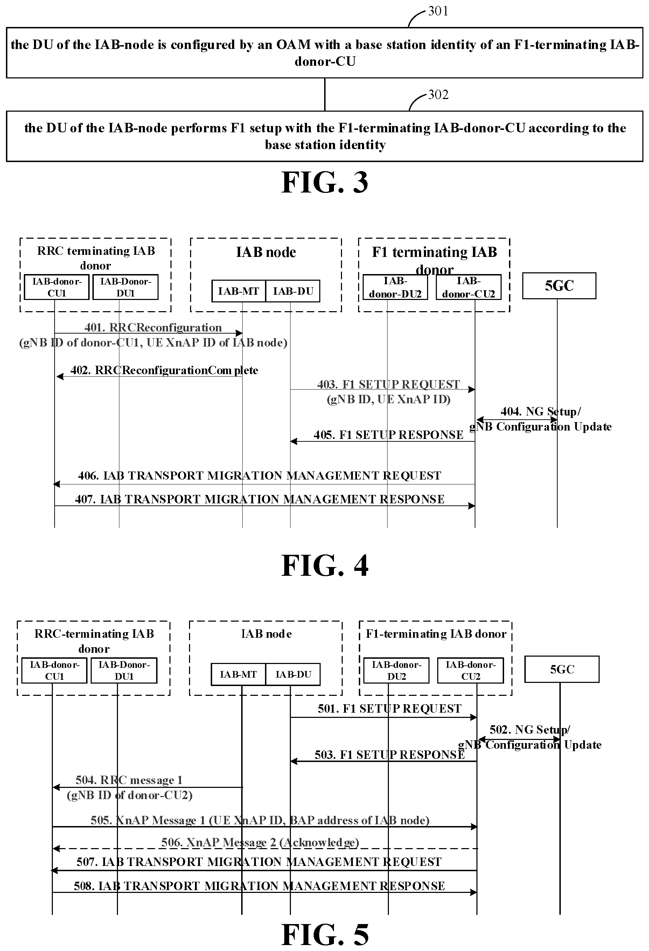

FIG. 3 is a schematic diagram of a method for IAB-node integration in the embodiments of the present disclosure, which is described from an IAB-node side, the IAB-node e.g. is the IAB-node 1 under the scenario shown in FIG. 2, comprising an MT and a DU, the MT may be also called an IAB-MT, and the DU may be called an IAB-DU. As shown in FIG. 3, the method comprises:
301: the DU of the IAB-node is configured by an OAM with a base station identity of an F1-terminating IAB-donor-CU; and
302: the DU of the IAB-node performs F1 setup with the F1-terminating IAB-donor-CU according to the base station identity.

It should be noted that the above FIG. 3 only schematically describes the embodiments of the present disclosure, but the present disclosure is not limited thereto. For example, an execution sequence of each operation may be adjusted appropriately, moreover some other operations may be increased or operations therein may be reduced. Persons skilled in the art may make appropriate modifications according to the above contents, not limited to the records in the above FIG. 3.

In the above embodiments, the base station identity may be a gNB ID, a Global gNB ID, a Global NG-RAN node ID, etc.

In the above embodiments, in the IAB-DU setup procedure of the third phase in FIG. 2, the DU of the IAB-node 1 needs to perform F1 setup with the F1-terminating IAB-donor-CU, and according to the embodiments of the present disclosure, the IAB-DU is configured by an OAM (Operation Administration and Maintenance) with the base station identity of the F1-terminating IAB-donor-CU, thereby the DU of the IAB-node may perform F1 setup with the F1-terminating IAB-donor-CU according to the base station identity, which solves a problem that the MT and the DU of the mobile IAB-node are integrated to different IAB-donors, so as to support configuration flexibility of the IAB-node, support movement of the IAB-node in extensive areas and can provide high-quality services for a UE served by the mobile IAB-node.

In the embodiments of the present disclosure, the RRC-terminating IAB-donor-CU and the F1-terminating IAB-donor-CU are different, for example as shown in FIG. 2, if the RRC-terminating IAB-donor is the IAB-donor 1, the RRC-terminating IAB-donor-CU is the IAB-Donor-CU1, also called "CU1" or "donor-CU1" for ease of description; if the F1-terminating IAB-donor is the IAB-donor 2, the F1-terminating IAB-donor-CU is the IAB-donor-CU2, also called "CU2" or "donor-CU2" for ease of description.

In some embodiments, in the first phase or the second phase shown in FIG. 2, the donor-CUT allocates one or more IP addresses for the IAB-node 1 via RRC signaling, these IP addresses are anchored at IAB-donor-DU1, thereby the IAB-node 1 may initiate TNL establishment and F1 setup procedures with the CU (donor-CU2) of the F1-terminating IAB-donor according to the IP address(es).

In some embodiments, if the IAB-node is only configured with a base station identity, the DU of the IAB-node may further discover a TNL address of the CU (CU2) of the F1-terminating donor via the base station identity, and perform F1 setup with the CU2 according to the base station identity and the TNL address.

In the above embodiments, if the TNL address of the donor-CU2 is not configured for the IAB-DU, the IAB-DU may use the same method as that used by a gNB-DU as a non-IAB to discover a TNL address of the donor-CU2 via the base station identity, such as an Xn-C TNL address discovery procedure, etc. For details, relevant technologies may be referred to.

In some embodiments, if the IAB-node is configured with a base station identity and is also configured with a TNL address (i.e., an IP address) of the CU (CU2) of the F1-terminating donor, the DU of the IAB-node may perform F1 setup with the F1-terminating IAB-donor-CU according to the base station identity and the TNL address.

In some embodiments, if the IAB-node is configured with a plurality of base station identities, the DU of the IAB-node may select one base station identity from the plurality of base station identities according to a pre-determined strategy, to perform F1 setup.

For example, the OAM configures base station identity information of a plurality of CUs for the IAB-DU, for example included in a list to indicate candidate donor-CU information. The IAB-DU may independently select one of the donor-CUs (such as the IAB-donor-CU2) and then perform F1 setup.

In some embodiments, if the IAB-node is further configured with priorities of the plurality of base station identities, the DU of the IAB-node may select a base station identity with the highest priority from the plurality of base station identities, to perform F1 setup.

For example, the above list may further include priority information of the IAB-donor-CU configured by the OAM, providing a further indication for the IAB-DU and facilitating the IAB-DU to perform IAB-donor-CU selection. For example, an IAB-donor-CU indicated as a high priority is selected first, and if the F1 setup fails, another IAB-donor-CU may be selected to perform the F1 setup.

In some embodiments, the DU of the IAB-node initiates TNL establishment and F1 setup procedures with the CU (IAB-donor-CU2) of the F1-terminating IAB-donor by using IP address(es) allocated by the CU (IAB-donor-CU1) of the RRC-terminating IAB-donor for the IAB-node.

In the above embodiments, in an F1 SETUP REQUEST message, a BAP address of the IAB-node may further be included. Thereby, after receiving the F1 SETUP REQUEST message, the CU (IAB-donor-CU2) of the F1-terminating IAB-donor saves the BAP address for the IAB-node.

In the above embodiments, if the BAP address conflicts with a BAP address of another node in a topology of the IAB-donor-CU2, the IAB-donor-CU2 may use this BAP address as a BAP address used by the IAB-node in the topology of the IAB-donor-CU1, and the IAB-donor-CU2 may further allocate a BAP address in the topology of the IAB-donor-CU2 for the IAB-node.

In the above embodiments, the IAB-donor-CU2 may transmit the allocated BAP address to the IAB-DU via an F1 SETUP RESPONSE message. For example, a BAP Address IE in the F1 SETUP RESPONSE message may be reused, indicating that it is a BAP address allocated by the IAB-donor-CU2 for the IAB-node, the present disclosure is not limited thereto.

In the above embodiments, after the IAB-donor-CU2 and the IAB-DU set up an F1 connection, the IAB-node is equivalent to belonging to topologies of two CUs (the IAB-donor-CU1 and the IAB-donor-CU2) and is configured by the two CUs. The two CUs need to perform further information exchange to perform an IAB transport migration management procedure and/or an IAB resource coordination procedure. These procedures interact over an Xn interface between the IAB-donor-CU1 and the IAB-donor-CU2. Since the IAB-donor-CU2 is an F1-terminating IAB-donor CU of the IAB-node, these IAB-related Xn procedures are typically initiated by the F1-terminating IAB-donor CU. Therefore, the IAB-donor-CU2 needs to know the base station identity of the IAB-donor-CU1 and the UE XnAP ID of the IAB-node at the IAB-donor-CU1, i.e., an NG-RAN node UE XnAP ID generated by the IAB-donor-CU1 for the IAB-node, also called a non F1-terminating IAB-Donor UE XnAP ID.

In the embodiments of the present disclosure, transfer of relevant information may be performed by the IAB-node, or may be performed by the IAB-donor-CU1, so that the IAB-donor-CU2 obtains base station information of the IAB-donor-CU1 and a UE XnAP ID generated by the IAB-donor-CU1 for the IAB-node.

The following descriptions are provided respectively.

In some embodiments, transfer of relevant information is performed by the IAB-node.

In the above embodiments, the MT of the IAB-node receives first information transmitted by the CU (IAB-donor-CU1) of the RRC-terminating IAB-donor, the first information including identity information of the IAB-node and/or identity information of the RRC-terminating IAB-donor; the DU of the IAB-node transmits second information related to the first information to the F1-terminating IAB-donor.

In the above embodiments, the identity information of the IAB-node e.g. is a UE XnAP ID generated by the RRC-terminating IAB-donor for the IAB-node; the identity information of the RRC-terminating IAB-donor e.g. is base station identity information of the RRC-terminating IAB-donor-CU. Here, the base station identity may be a gNB ID, a Global gNB ID, a Global NG-RAN node ID, etc.

In the above embodiments, the DU of the IAB-node may transmit the second information to the F1-terminating IAB-donor via a F1 SETUP REQUEST message when performing the F1 setup with (a future) F1-terminating IAB-donor. However, the present disclosure is not limited thereto, the DU of the IAB-node may further transmit the second information via other F1AP signaling after the F1 setup. Upon receiving the second information, the IAB-donor-CU2 may conclude that the MT part of the IAB-node does not belong to the topology of the IAB-donor-CU2, i.e., the MT of the IAB-node is terminated at another donor-CU, and the IAB-node is a boundary IAB-node. The IAB-donor-CU2 may further determine that the MT of the IAB-node is terminated at another donor-CU by determining whether the BAP address of the IAB-node in the received F1 SETUP REQUEST message or the IP address that the IAB-node uses is not an address in its own topology (i.e., not allocated by the IAB-donor-CU2).

In the above embodiments, in an example, the first information includes the identity information of the IAB-node and the identity information of the RRC-terminating IAB-donor. In this example, the second information is the same as the first information, thereby the DU of the IAB-node only needs to directly transmit the first information obtained by the MT of the IAB-node to the F1-terminating IAB-donor. "Same" here refers to that their contents are the same, that is, information included in the first information and the second information are the same.

In the above embodiments, in another example, the first information includes the identity information of the IAB-node and does not include the identity information of the RRC-terminating IAB-donor. In this example, the second information includes a serving cell identity NCGI of the MT of the IAB-node and the identity information of the IAB-node.

In the above example, since the IAB-MT itself obtains cell identity information (NCGI, NR Cell Global Identifier) via system information broadcast by the IAB-donor-CU1, and the cell identity information implicitly includes the base station identity, the IAB-donor-CU1 may only transmit the UE XnAP ID of the IAB-node to the IAB-MT, and the collocated IAB-DU transmits the serving cell identity NCGI of the IAB-MT and the UE XnAP ID to the IAB-donor-CU2. Thereby, the IAB-donor-CU2 may determine a bit length of the base station identity via a certain method (such as based on an OAM configuration), and then obtain the base station identity from the NCGI.

In the above embodiments, the first information may be explicitly included in an RRC reconfiguration message or is included in a container of the RRC reconfiguration message. For example, the RRC reconfiguration message includes a first IE in which the first information is included; for another example, a bap-Config IE of the RRC reconfiguration message includes a second IE or a first field, in which the first information is included.

In the above embodiments, the second information may be explicitly included in an F1AP message or is included in a container of the F1AP message. For example, the F1AP message includes a third IE in which the second information is included. The F1AP message e.g. is an F1 SETUP REQUEST message, however the present disclosure is not limited thereto.

FIG. 4 is a schematic diagram of a process for setting an IAB-DU in an IAB-node integration procedure, showing a situation of configuring the IAB-DU based on OAM. As shown in FIG. 4, the procedure comprises:
401: the IAB-donor-CU1 transmits an RRC reconfiguration (RRCReconfiguration) message to the IAB-MT;
402: the IAB-MT transmits an RRC reconfiguration complete (RRCReconfigurationComplete) message to the IAB-donor-CU1;
403: the IAB-DU transmits second information to the IAB-donor-CU2;
404: a 5G core network performs relevant configurations for the IAB-donor-CU2;
405: the IAB-donor-CU2 feeds back an F1 SETUP RESPONSE message to the IAB-DU, indicating that setting of the IAB-DU is completed, and the IAB-node may start to provide air interface services for a UE;
406: the IAB-donor-CU2 transmits "IAB TRANSPORT MIGRATION MANAGEMENT REQUEST" to the IAB-donor-CU1;
407: the IAB-donor-CU1 transmits "IAB TRANSPORT MIGRATION MANAGEMENT RESPOSNE" to the IAB-donor-CU2.

The above 401 and 402 are procedures of configuring the IAB-MT by the IAB-donor-CU1. In the operation 401, the IAB-donor-CU1 configures the first information using the RRCReconfiguration message;
In the above 401, the first information includes the UE XnAP ID of the IAB-node and an optional base station identity of the IAB-donor-CU1. The first information may be explicitly included in the RRC reconfiguration message or may be placed in a container in the RRC reconfiguration message, thus the IAB-DU directly places the container in the F1 SETUP REQUEST message and transmits it to the IAB-donor-CU2, that is, the IAB-node does not decode the container but transmits it transparently and directly.

For example, a new IE (first IE) may be defined in the RRCReconfiguration message to indicate the first information, or a new sub-IE (second IE) or field (first field) may be defined in the bap-Config IE in the RRCReconfiguration message to indicate the first information.

The above 401 and 402 may occur at any phase before the third phase shown in FIG. 2, such as at any moment from the first phase to the phase 2-2, the present disclosure does not impose restrictions thereto.

Before the above step 403, the OAM makes configurations for the IAB-DU, comprising configuring the base station identity of the donor-CU2, etc., for the IAB-DU to perform the F1 setup to the donor-CU2.

In the above 403, the IAB-DU may transmit the second information using the F1 SETUP REQUEST message. The second information may include relevant identity information of the IAB-donor-CU1 and the UE XnAP ID (from the first information) of the IAB-node in the IAB-donor-CU1. The relevant identity information of the IAB-donor-CU1 may be a base station identity in the first information, or may be an NCGI of a serving cell. The second information may be explicitly included in an F1AP message or may be placed in a container in the F1AP message. For example, a new IE (third IE) may be defined in the F1 SETUP REQUEST message to indicate the second information.

The above 406 and 407 are examples of an IAB related Xn procedure between the IAB-donor-CU2 and the IAB-donor-CU1, which may be carried out after an IAB integration procedure, such as in an IAB Transport Migration Management procedure initiated by the IAB-donor-CU2. The present disclosure is not limited thereto.

According to the above embodiments, the IAB-donor-CU2 is able to obtain from the IAB-node the base station information of the IAB-donor-CU1 and the UE XnAP ID generated by the IAB-donor-CU1 for the IAB-node.

In some other embodiments, transfer of relevant information is performed by the IAB-donor-CU1.

In the above embodiments, the OAM makes configurations for the IAB-DU. the MT of the IAB-node transmits a first RRC message to the CU (IAB-donor-CU1) of the RRC-terminating IAB-donor, the first RRC message including the identity information of the F1-terminating IAB-donor configured by the OAM, so that the RRC-terminating IAB-donor transmits the identity information of the IAB-node to the F1-terminating IAB-donor.

In the above embodiments, the first RRC message e.g. is a UEAssistanceInformation message; the UEAssistanceInformation message includes a fourth IE in which the identity information of the F1-terminating IAB-donor is included.

In the above embodiments, optionally, the MT of the IAB-node may further initiate a UE assistance information reporting procedure after the F1 setup between the DU of the IAB-node and the F1-terminating IAB-donor is completed. The IAB-node has a capability of providing the identity information of the F1-terminating IAB-donor, and the IAB-node is configured with capability reporting, and the IAB-node is in an RRC connected state. That is, if the IAB-node has a capability of providing the identity information of the F1-terminating IAB-donor, and the IAB-node is configured with capability reporting, when the IAB-node is in an RRC connected state, the IAB-node may initiate the UE assistance information reporting procedure after the F1 setup between the IAB-DU and the CU2 is completed.

In the above embodiments, the RRC-terminating IAB-donor-CU may transmit a first Xn message to the F1-terminating IAB-donor, the first Xn message including a UE XnAP ID generated by the RRC-terminating IAB-donor for the IAB-node and/or a BAP address of the IAB-node.

In the above embodiments, the F1-terminating IAB-donor may further feedback a second Xn message to the RRC-terminating IAB-donor-CU, the second Xn message including acknowledgment information.

FIG. 5 is another schematic diagram of a process for setting an IAB-DU in an IAB-node integration procedure, showing a situation of configuring the IAB-DU based on OAM. As shown in FIG. 5, the procedure comprises:
501: the IAB-DU and the IAB-donor-CU2 perform the F1 setup;
502: a 5G core network makes relevant configurations for the IAB-donor-CU2;
503: the IAB-donor-CU2 responds an F1 setup response to the IAB-DU;
504: the IAB-MT transmits an RRC message 1 to the IAB-donor-CU1, the RRC message 1 including a base station identity of the IAB-donor-CU2;
505: the IAB-donor-CU1 transmits an XnAP message 1 to the IAB-donor-CU2, the XnAP message 1 including a UE XnAP ID and/or a BAP address of the IAB-node;
506: the IAB-donor-CU2 transmits an XnAP message 2 to the IAB-donor-CU1, the XnAP message 2 including acknowledgement information;
507: the IAB-donor-CU2 transmits "IAB TRANSPORT MIGRATION MANAGEMENT REQUEST" to the IAB-donor-CU1;
508: the IAB-donor-CU1 transmits "IAB TRANSPORT MIGRATION MANAGEMENT RESPONSE" to the IAB-donor-CU2.

The above 501-503 are conventional F1 setup procedures from the IAB-DU to the IAB-donor-CU2, for details, relevant technologies may be referred to.

In the above 504, since the information of the IAB-donor-CU2 is configured by the OAM for the IAB-node, the IAB-node may inform the IAB-donor-CU1 about the identity information of the IAB-donor-CU2, so that the IAB-donor-CU1 may transmit the IAB identity information to the IAB-donor-CU2. Thus, in 504, the IAB-node may notify the IAB-donor-CU1 via an uplink (from a UE to a network side) RRC message. The RRC message is a first RRC message, including the base station identity of the IAB-donor-CU2, i.e., an F1-terminating donor gNB ID of the IAB-node, or a gNB ID of the CU of the collocated IAB-DU of the IAB-MT.

The first RRC message may reuse the UEAssistanceInformation message, for example a new IE (fourth IE) is added in UEAssistanceInformation to include the base station identity of the IAB-donor-CU2.

In addition, in 504, enhancements may further be made in an initialization portion of an RRC layer regarding the UE assistance information. For example: if a UE (IAB-MT) with a capability of providing F1-terminating donor node information is configured to be reported, when it is in a connected state (RRC_CONNECTED), it may initiate the UE assistance information reporting procedure after F1 setup of the collocated IAB-DU is completed.

The above 505 and 506 are XnAP procedures between RAN nodes, and are used for the IAB-donor-CU1 to transmit the IAB identity information to the IAB-donor-CU2.

In 505 and 506, a new XnAP procedure may be defined, for example a UE-associated class 1 IAB procedure may be defined, the procedure consists of a first Xn message and a second Xn message. The procedure is initiated by the non-F1-terminating IAB-donor-CU. The first Xn message includes the UE XnAP ID of the IAB-MT, generated by the IAB-donor-CU1, and may further include the BAP address of the IAB-node, for the IAB-donor-CU2 to identify the IAB-node. The second Xn message is an acknowledgment message of the IAB-donor-CU2.

Moreover, the second Xn message is optional, for example if a class 2 XnAP procedure is defined, the second Xn message may be omitted.

In addition, the above 505 and 506 may further reuse an NG-RAN Node Configuration Update procedure. The IAB identity information (UE XnAP ID, BAP address of the IAB-node) as a new IE is included in an NG-RAN NODE CONFIGURATION UPDATE message.

The above 507 and 508 are examples of an IAB related Xn procedure between the IAB-donor-CU2 and the IAB-donor-CU1, which may be carried out after an integration procedure of the IAB-node, such as an IAB Transport Migration Management procedure initiated by the IAB-donor-CU2. The present disclosure is not limited thereto.

According to the above embodiments, the IAB-donor-CU2 is able to obtain the base station information of the IAB-donor-CU1 and the UE XnAP ID generated by the IAB-donor-CU1 for the IAB-node, from the IAB-donor-CU1.

In some embodiments, the MT of the IAB-node may transmit an RRC setup complete message to the RRC-terminating IAB-donor, the RRC setup complete message including third information, the third information indicating a mobile IAB capability of the IAB-node, so that the RRC-terminating IAB-donor selects an AMF that supports mobile IAB.

In the above embodiments, for the first phase shown in FIG. 2, in a set up procedure of the IAB-MT, the IAB-MT may perform an RRC connection setup procedure toward the IAB-donor-CU1 and perform authentication with a network. To indicate its own mobile IAB capability, the IAB-MT may include an indication of the mobile IAB-node in the RRCSetupComplete message (RRC connection setup complete message, also called Message 5), which is used by the IAB-donor to select an AMF (Access and Mobility Management Function) that supports mobile IAB.

In some embodiments, the MT of the IAB-node may receive a broadcast message transmitted by an RRC-terminating IAB-donor, the broadcast message indicating a cell that supports mobile IAB; the IAB-node may perform cell selection according to the broadcast message. Specifically, the broadcast message is transmitted by the donor-DU or IAB-DU controlled by the IAB-donor.

In the above embodiments, for the first phase shown in FIG. 2, in a cell selection procedure of the mobile IAB-MT, a cell broadcasting "support for the mobile IAB" may be selected, i.e., the cell is selected as a parent node cell. The broadcast message indicating supporting mobile IAB may be implemented via a SIB1 (System Information Block 1) message of a base station. The present disclosure is not limited thereto.

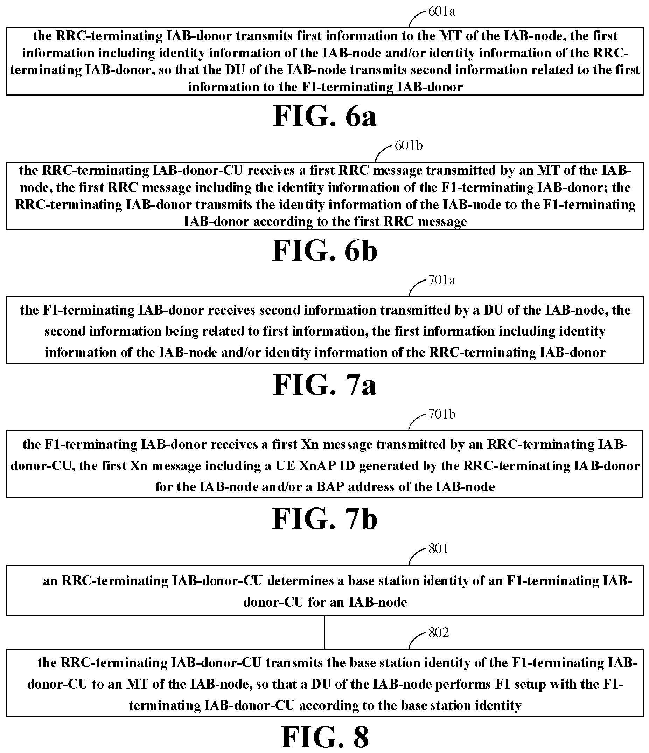

FIG. 6a is another schematic diagram of a method for IAB-node integration in the embodiments of the present disclosure, FIG. 6b is a further schematic diagram of a method for IAB-node integration in the embodiments of the present disclosure, these two examples are described from the RRC-terminating IAB-donor side, the RRC-terminating IAB-donor e.g. is the IAB-donor 1 shown in FIG. 2, comprising a CU (IAB-donor-CU1) and a DU (IAB-donor-DU1). Content identical to that in the preceding embodiments will not be repeated.

As shown in FIG. 6a, in an example, the method comprises:
601a: the RRC-terminating IAB-donor transmits first information to the MT of the IAB-node (step 401), the first information including identity information of the IAB-node and/or identity information of the RRC-terminating IAB-donor, so that the DU of the IAB-node transmits second information related to the first information to the F1-terminating IAB-donor (step 403).

In some embodiments, the identity information of the IAB-node may be a UE XnAP ID generated by the RRC-terminating IAB-donor for the IAB-node; the identity information of the RRC-terminating IAB-donor may be base station identity information of the RRC-terminating IAB-donor-CU.

In the above embodiments, in an example, the first information includes the identity information of the IAB-node and the identity information of the RRC-terminating IAB-donor, the second information is the same as the first information; in another example, the first information includes the identity information of the IAB-node; the second information includes a serving cell identity NCGI of the MT of the IAB-node and the identity information of the IAB-node.

In the above embodiments, the first information may be explicitly included in an RRC reconfiguration message or is included in a container of the RRC reconfiguration message.

In the above embodiments, in an example, the RRC reconfiguration message includes a first IE, in which the first information is included; in another example, a *bap-Config* IE of the RRC reconfiguration message includes a second IE or a first field, in which the first information is included.

As shown in FIG. 6b, in another example, the method comprises:
601b: the RRC-terminating IAB-donor-CU receives a first RRC message transmitted by an MT of the IAB-node (step 504), the first RRC message including the identity information of the F1-terminating IAB-donor; the RRC-terminating IAB-donor transmits the identity information of the IAB-node to the F1-terminating IAB-donor according to the first RRC message.

In some embodiments, the first RRC message may be a UEAssistanceInformation message; for example, the UEAssistanceInformation message includes a fourth IE in which the identity information of the F1-terminating IAB-donor is included.

In some embodiments, the RRC-terminating IAB-donor-CU transmits a first Xn message to the F1-terminating IAB-donor (step 505), the first Xn message including a UE XnAP ID generated by the RRC-terminating IAB-donor for the IAB-node and/or a BAP address of the IAB-node.

In some embodiments, optionally, the RRC-terminating IAB-donor-CU may further receive a second Xn message transmitted by the F1-terminating IAB-donor (step 506), the second Xn message including acknowledgment information.

In the above two examples, the RRC-terminating IAB-donor-CU (IAB-donor-CU1) is different from the F1-terminating IAB-donor-CU (IAB-donor-CU2).

In the above two examples, the RRC-terminating IAB-donor-CU allocates one or more IP addresses for the IAB-node, so that the IAB-node initiates TNL establishment and F1 setup procedures with the F1-terminating IAB-donor-CU by using the IP address(es). The IP address(es) may be anchored at the RRC-terminating IAB-donor-DU.

In the above two examples, in some implementations, the RRC-terminating IAB-donor may further receive an RRC setup complete message transmitted by the MT of the IAB-node, the RRC setup complete message including third information, the third information indicating a mobile IAB capability of the IAB-node; the RRC-terminating IAB-donor selects an AMF that supports mobile IAB according to the third information.

In the above two examples, in some implementations, the RRC-terminating IAB-donor may further transmit a broadcast message, the broadcast message indicating a cell that supports mobile IAB; thereby, after receiving the broadcast message, the IAB-node may perform cell selection according to the broadcast message.

FIG. 7a is a further schematic diagram of a method for IAB-node integration in the embodiments of the present disclosure, FIG. 7b is a further schematic diagram of a method for IAB-node integration in the embodiments of the present disclosure, these two examples are described from the F1-terminating IAB-donor side, the F1-terminating IAB-donor e.g. is the IAB-donor 2 shown in FIG. 2, comprising a CU (IAB-donor-CU2) and a DU (IAB-donor-DU2), the method in FIG. 7a corresponds to the method in FIG. 6a, and the method in FIG. 7b corresponds to the method in FIG. 6b. Content identical to that in the preceding embodiments will not be repeated.

As shown in FIG. 7a, in an example, the method comprises:
701a: the F1-terminating IAB-donor receives second information transmitted by a DU of the IAB-node, the second information being related to first information, the first information including identity information of the IAB-node and/or identity information of the RRC-terminating IAB-donor.

In some embodiments, the identity information of the IAB-node is a UE XnAP ID generated by the RRC-terminating IAB-donor for the IAB-node; the identity information of the RRC-terminating IAB-donor is base station identity information of the RRC-terminating IAB-donor-CU.

In some embodiments, in an example, the first information includes the identity information of the IAB-node and the identity information of the RRC-terminating IAB-donor, the second information is the same as the first information; in another example, the first information includes the identity information of the IAB-node; the second information includes a serving cell identity NCGI of the MT of the IAB-node and the identity information of the IAB-node.

In some embodiments, the second information is explicitly included in an F1AP message or is included in a container of the F1AP message. The F1AP message may be an F1 SETUP REQUEST message. Moreover, the F1AP message may include a third IE in which the second information is included.

In some embodiments, the F1-terminating IAB-donor-CU receives an F1 SETUP REQUEST message transmitted by the DU of the IAB-node, the F1 SETUP REQUEST message including the BAP address of the IAB-node; the F1-terminating IAB-donor saves the BAP address for the IAB-node.

As shown in FIG. 7b, in another example, the method comprises:
701b: the F1-terminating IAB-donor receives a first Xn message transmitted by an RRC-terminating IAB-donor-CU, the first Xn message including a UE XnAP ID generated by the RRC-terminating IAB-donor for the IAB-node and/or a BAP address of the IAB-node.

In some embodiments, the F1-terminating IAB-donor may further transmit a second Xn message to the RRC-terminating IAB-donor-CU, the second Xn message including acknowledgment information.

Each of the above embodiments is only illustrative for the embodiments of the present disclosure, but the present disclosure is not limited thereto, appropriate modifications may be further made based on the above each embodiment. For example, each of the above embodiments may be used individually, or one or more of the above embodiments may be combined.

According to the method in the embodiments of the present disclosure, a problem of IAB-node integration is solved, so that the IAB-MT and a collocated IAB-DU are able to be integrated onto different donor-CUs, which improves flexibility of a network configuration.

### Embodiments of a second aspect

The embodiments of the present disclosure provide a method for IAB-node integration, applicable to the scenario shown in FIG. 2. Unlike the embodiments of the first aspect, in the embodiments of the present disclosure, the IAB-donor-CU1 designates an F1-terminating donor-CU (i.e., IAB-donor-CU2) for the IAB-node. That is, the relevant information of the IAB-donor-CU2 is not configured by the OAM to the IAB-DU, but is configured by the RRC-terminating IAB-donor-CU to the IAB-MT.

FIG. 8 is a schematic diagram of a method for IAB-node integration in the embodiments of the present disclosure, which is described from the RRC-terminating IAB-donor side, the RRC-terminating IAB-donor e.g. is the IAB-donor 1 shown in FIG. 2, comprising a CU (IAB-donor-CU1) and a DU (IAB-donor-DU1). Content identical to that in the embodiments of the first aspect will not be repeated. As shown in FIG. 8, the method comprises:
801: an RRC-terminating IAB-donor-CU determines a base station identity of an F1-terminating IAB-donor-CU for an IAB-node; and
802: the RRC-terminating IAB-donor-CU transmits the base station identity of the F1-terminating IAB-donor-CU to an MT of the IAB-node, so that a DU of the IAB-node performs F1 setup with the F1-terminating IAB-donor-CU according to the base station identity.

It should be noted that the above FIG. 8 only schematically describes the embodiments of the present disclosure, but the present disclosure is not limited thereto. For example, an execution sequence of each operation may be adjusted appropriately, moreover some other operations may be increased or operations therein may be reduced. Persons skilled in the art may make appropriate modifications according to the above contents, not limited to the records in the above FIG. 8.

In some embodiments, the RRC-terminating IAB-donor-CU is configured by the OAM with the base station identity of the Fl-terminating IAB-donor, thereby obtaining the base station identity of the F1-terminating IAB-donor-CU.

For example, the OAM configures base station identities of multiple IAB-donor-CUs, and the RRC-terminating IAB-donor-CU selects one base station identity from these multiple identities according to a predetermined policy.

For another example, the OAM configures base station identities of multiple IAB-donor-CUs and a priority of each base station identity, and the RRC-terminating IAB-donor-CU selects a base station identity with the highest priority among these multiple base station identities.

In some other embodiments, the RRC-terminating IAB-donor-CU autonomously selects an F1-terminating IAB-donor according to information obtained based on an ANR (Automatic Neighbor Relations) functionality (such as neighbor cell information), thereby obtaining a base station identity of the F1-terminating IAB-donor.

In some embodiments, the RRC-terminating IAB-donor-CU transmits the base station identity of the F1-terminating IAB-donor to the MT of the IAB-node via an RRC reconfiguration message. Thereby, the IAB-node obtains the base station identity of the F1-terminating IAB-donor.

In the above embodiments, after obtaining the base station identity of the F1-terminating IAB-donor, the DU of the IAB-node may perform F1 setup with the F1-terminating IAB-donor-CU according to the base station identity and a TNL address of the F1-terminating IAB-donor-CU discovered via the base station identity. Embodiments of the first aspect may be specifically referred to.

In the above embodiments, optionally, the RRC-terminating IAB-donor-CU further transmits the TNL address of the F1-terminating IAB-donor-CU to the MT of the IAB-node via an RRC reconfiguration message. Thereby, the DU of the IAB-node performs the F1 setup with the F1-terminating IAB-donor-CU according to the base station identity and the TNL address. Embodiments of the first aspect may be specifically referred to.

In the above embodiments, there are no restrictions on a mode in which the RRC reconfiguration message carries the base station identity, for example a new IE (called a fifth IE) may be added in the RRC reconfiguration message, or a new sub-IE (called a sixth IE) or field (called a second field) may be defined in a *bap-Config* IE of the RRC reconfiguration message, to indicate the base station identity of the F1-terminating IAB-donor and the TNL address (optional). For example, the fifth IE includes the base station identity of the F1-terminating IAB-donor and the TNL address (optional); for another example, the sixth IE or the second field includes the base station identity of the F1-terminating IAB-donor and the TNL address (optional).

In some embodiments, the RRC-terminating IAB-donor-CU allocates one or more IP addresses for the IAB-node, and the IP address(es) is/are anchored at the RRC-terminating IAB-donor-DU. Thereby, the IAB-node may initiate TNL establishment and F1 setup procedures with the F1-terminating IAB-donor-CU by using the allocated IP address(es). Embodiments of the first aspect may be specifically referred to.

In some embodiments, the RRC-terminating IAB-donor-CU (IAB-donor-CU1) further transmits first information to the MT of the IAB-node, the first information including identity information of the IAB-node and/or identity information of the RRC-terminating IAB-donor; the DU of the IAB-node transmits second information related to the first information to the F1-terminating IAB-donor.

For the identity information of the IAB-node, the identity information of the RRC-terminating IAB-donor, the content related to the first information and the content related to the second information, the embodiments of the first aspect may be referred to, elaboration is not provided.

The first information may be transmitted via the RRC reconfiguration message. For example, it may be transmitted together with the base station identity of the F1-terminating IAB-donor via the RRC reconfiguration message. For a specific process, FIG. 4 may be referred to. A difference is that in step 401, in addition to including the first information, the RRC reconfiguration message may further include the base station identity of the F1-terminating IAB-donor.

In some embodiments, the RRC-terminating IAB-donor-CU transmits a first Xn message to the F1-terminating IAB-donor, the first Xn message including a UE XnAP ID generated by the RRC-terminating IAB-donor for the IAB-node and/or a BAP address of the IAB-node. Embodiments of the first aspect may be specifically referred to, such as the operation 505 shown in FIG. 5.

In the above embodiments, optionally, the RRC-terminating IAB-donor-CU receives a second Xn message transmitted by the F1-terminating IAB-donor, the second Xn message including acknowledgment information. Embodiments of the first aspect may be specifically referred to, such as the operation 506 shown in FIG. 5.

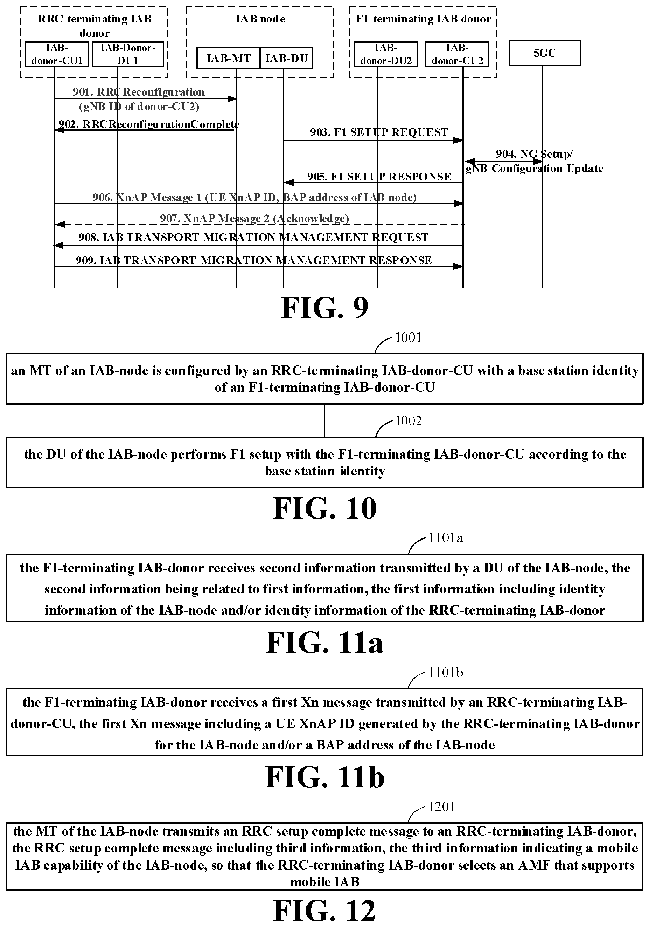

FIG. 9 is a further schematic diagram of a process for setting an IAB-DU in an IAB-node integration procedure, showing a situation where the IAB-donor-CU2 designates the IAB-donor-CU1. As shown in FIG. 9, the procedure comprises:
901: the IAB-donor-CU1 transmits an RRC reconfiguration (RRCReconfiguration) message to the IAB-MT, the RRC reconfiguration message including the base station identity and the TNL address of the IAB-donor-CU2 (optional);
902: the IAB-MT transmits an RRC reconfiguration completion (RRCReconfigurationComplete) message to the IAB-donor-CU1;
903: the IAB-DU and the IAB-donor-CU2 perform the F1 setup;
904: a 5G core network makes relevant configurations for the IAB-donor-CU2;
905: the IAB-donor-CU2 responds an F1 setup response to the IAB-DU;
906: the IAB-donor-CU1 transmits an XnAP message 1 to the IAB-donor-CU2, the XnAP message 1 including the UE XnAP ID and/or the BAP address of the IAB-node;
907: the IAB-donor-CU2 transmits an XnAP message 2 to the IAB-donor-CU1, the XnAP message 2 including acknowledgement information;
908: the IAB-donor-CU2 transmits "IAB TRANSPORT MIGRATION MANAGEMENT REQUEST" to the IAB-donor-CU1;
909: the IAB-donor-CU1 transmits "IAB TRANSPORT MIGRATION MANAGEMENT RESPONSE" to the IAB-donor-CU2.

The above operations 906-909 are the same as the operations 505-508 in FIG. 5, the embodiments of the first aspect may be specifically referred to.

In some other embodiments, the IAB-donor-CU1 broadcasts a list via a cell, including base station identities of one or more IAB-donor-CUs which have an IP connection with the IAB-donor-DU1 and support mobile IAB, the IAB-MT selects the IAB-donor-CU2 by receiving a broadcast message when accessing in the first phase, a selection criterion may be based on an OAM configuration, or determines whether to perform cell access and whether to perform cell reselection by comparing an IAB-donor-CU list configured by the OAM configuration with a broadcast IAB-donor-CU list.

In some embodiments, similar to the embodiments of the first aspect, the RRC-terminating IAB-donor may further receive an RRC setup complete message transmitted by the MT of the IAB-node, the RRC setup complete message including third information, the third information indicating a mobile IAB capability of the IAB-node; thereby, the RRC-terminating IAB-donor may select an AMF that supports mobile IAB according to the third information. Embodiments of the first aspect may be specifically referred to.

In some embodiments, similar to the embodiments of the first aspect, the DU of the RRC-terminating IAB-donor may further transmit a broadcast message, the broadcast message indicating a cell that supports mobile IAB, so that the IAB-node performs cell selection according to the broadcast message. Embodiments of the first aspect may be specifically referred to.

FIG. 10 is another schematic diagram of a method for IAB-node integration in the embodiments of the present disclosure, which is described from the IAB-node side. Contents same as those in the embodiments of the first aspect and the preceding embodiments are not repeated. As shown in FIG. 10, the method comprises:
1001: an MT of an IAB-node is configured by an RRC-terminating IAB-donor-CU with a base station identity of an F1-terminating IAB-donor-CU; and
1002: the DU of the IAB-node performs F1 setup with the F1-terminating IAB-donor-CU according to the base station identity.

In the above embodiments, optionally, the MT of the IAB-node is further configured with a TNL address of the F1-terminating IAB-donor-CU. Behaviors of the IAB-node are the same as the behaviors of the IAB-node in the embodiments of the first aspect, which are omitted for description here.

In some embodiments, the MT of the IAB-node further receives first information from the IAB-donor-CU1, and on this basis, transmits second information to the IAB-donor-CU2. Specific contents have been described in the preceding embodiments and the embodiments of the first aspect, and are not elaborated here.

FIG. 11a is another schematic diagram of a method for IAB-node integration in the embodiments of the present disclosure, FIG. 11b is another schematic diagram of a method for IAB-node integration in the embodiments of the present disclosure, these two examples illustrate from the F1-terminating IAB-donor side. Contents same as those in the embodiments of the first aspect and the preceding embodiments are not repeated.

As shown in FIG. 11a, in an example, the method comprises:
1101a: the F1-terminating IAB-donor receives second information transmitted by a DU of the IAB-node, the second information being related to first information, the first information including identity information of the IAB-node and/or identity information of the RRC-terminating IAB-donor.

Implementations of the above step are the same as the implementations of 701a in FIG. 7a, and are not elaborated here.

As shown in FIG. 11b, in another example, the method comprises:
1101b: the F1-terminating IAB-donor receives a first Xn message transmitted by an RRC-terminating IAB-donor-CU, the first Xn message including a UE XnAP ID generated by the RRC-terminating IAB-donor for the IAB-node and/or a BAP address of the IAB-node.

In some embodiments, the F1-terminating IAB-donor further transmits a second Xn message to the RRC-terminating IAB-donor-CU, the second Xn message including acknowledgment information.

Each of the above embodiments is only illustrative for the embodiments of the present disclosure, but the present disclosure is not limited thereto, appropriate modifications may be further made based on the above each embodiment. For example, each of the above embodiments may be used individually, or one or more of the above embodiments may be combined.

According to the method in the embodiments of the present disclosure, a problem of IAB-node integration is solved, so that the IAB-MT and a collocated IAB-DU are able to be integrated onto different donor-CUs, which improves flexibility of a network configuration.

### Embodiments of a third aspect

The embodiments of the present disclosure provide a setting method, applicable to the scenario shown in FIG. 2, which is described from an IAB-node side, the IAB-node e.g. is the IAB-node 1 under the scenario shown in FIG. 2, comprising an MT and a DU, the MT may be also called an IAB-MT, and the DU may be called an IAB-DU.

FIG. 12 is a schematic diagram of a setting method in the embodiments of the present disclosure, as shown in FIG. 12, the method comprises:
1201: the MT of the IAB-node transmits an RRC setup complete message to an RRC-terminating IAB-donor, the RRC setup complete message including third information, the third information indicating a mobile IAB capability of the IAB-node, so that the RRC-terminating IAB-donor selects an AMF that supports mobile IAB.

In the above embodiments, for the first phase shown in FIG. 2, in a set up procedure of the IAB-MT, the IAB-MT may perform an RRC connection setup procedure toward the IAB-donor-CU1 and perform authentication with a network. To indicate its own mobile IAB capability, the IAB-MT may include an indication of the mobile IAB-node in the RRCSetupComplete message (RRC setup complete message, also called a message 5), which is used by the IAB-donor to select an AMF (Access and Mobility Management Function) that supports mobile IAB.

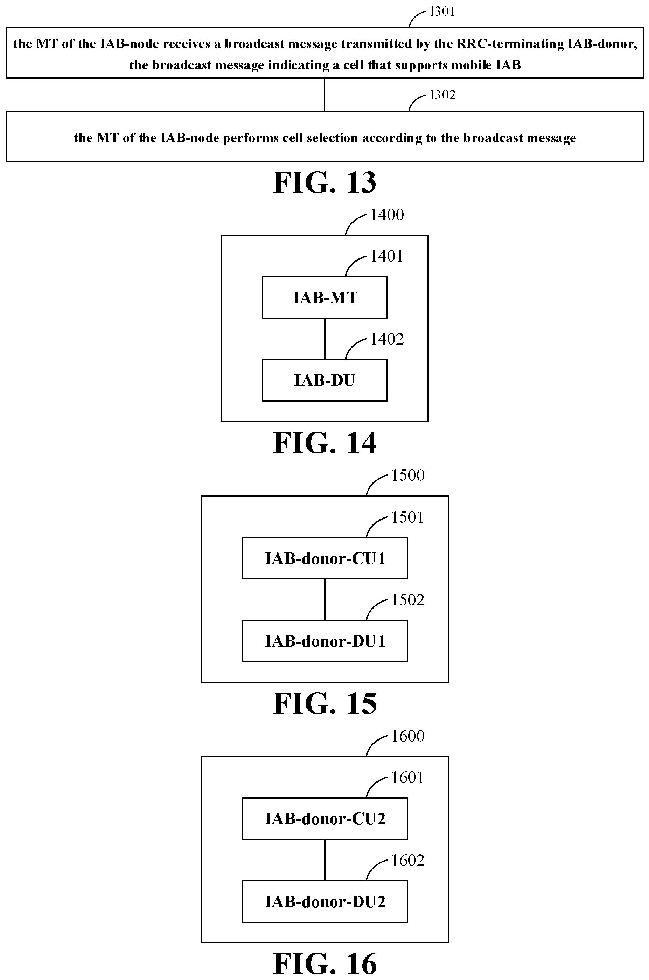

FIG. 13 is another schematic diagram of a setting method in the embodiments of the present disclosure, as shown in FIG. 13, the method comprises:
1301: the MT of the IAB-node receives a broadcast message transmitted by the RRC-terminating IAB-donor, the broadcast message indicating a cell that supports mobile IAB; and
1302: the MT of the IAB-node performs cell selection according to the broadcast message.

In the above embodiments, the broadcast message e.g. is a SIB message, the present disclosure is not limited thereto.

In the above embodiments, for the first phase shown in FIG. 2, in a cell selection procedure of the mobile IAB-MT, a cell broadcasting "support for the mobile IAB" may be selected, i.e., the cell is selected as a parent node cell. The broadcast message indicating supporting mobile IAB may be implemented via a SIB (System Information Block) message of a base station. The present disclosure is not limited thereto.

Each of the above embodiments is only illustrative for the embodiments of the present disclosure, but the present disclosure is not limited thereto, appropriate modifications may be further made based on the above each embodiment. For example, each of the above embodiments may be used individually, or one or more of the above embodiments may be combined.

According to the method in the embodiments of the present disclosure, a problem of IAB-node integration is solved, so that the IAB-MT and a collocated IAB-DU are able to be integrated onto different donor-CUs, which improves flexibility of a network configuration.

### Embodiments of a fourth aspect

The embodiments of the present disclosure provide an apparatus for IAB-node integration.

FIG. 14 is a schematic diagram of an apparatus for IAB-node integration in the embodiments of the present disclosure, the apparatus e.g. may be an IAB-node in an IAB network, or may be a component or component(s) or assemblies configured in the IAB-node. The IAB-node corresponds to the IAB-node 1 in FIG. 2. The contents same as those in the embodiments of the first aspect are not repeated again.

As shown in FIG. 14, the apparatus comprises an IAB-MT (mobile termination) 1401 and an IAB-DU (distributed unit) 1402, wherein the IAB-DU 1402 is configured by an OAM or the IAB-MT 1401 is configured by an RRC-terminating IAB-donor-CU with a base station identity of an F1-terminating IAB-donor-CU; and the IAB-DU 1402 performs F1 setup with the F1-terminating IAB-donor according to the base station identity.

In some embodiments, the RRC-terminating IAB-donor-CU is different from the F1-terminating IAB-donor-CU.

In some embodiments, the IAB-DU 1402 discovers a TNL address of the F1-terminating IAB-donor-CU via the base station identity; and the IAB-DU 1402 performs F1 setup with the F1-terminating IAB-donor-CU according to the base station identity and the TNL address.

In some embodiments, the IAB-DU 1402 is further configured by the OAM with the TNL address of the F1-terminating IAB-donor-CU; and the IAB-DU 1402 performs F1 setup with the F1-terminating IAB-donor-CU according to the base station identity and the TNL address.

In some embodiments, the OAM configures a plurality of base station identities, and the IAB-DU 1402 selects one base station identity from the plurality of base station identities according to a predetermined strategy, to perform F1 setup.

In the above embodiments, the OAM may further configure priorities of the plurality of base station identities, and the IAB-DU 1402 selects a base station identity with the highest priority among the plurality of base station identities, to perform F1 setup.

In some embodiments, the IAB-DU 1402 initiates TNL establishment and F1 setup procedures with the F1-terminating IAB-donor-CU by using IP address(es) allocated by the RRC-terminating IAB-donor-CU for the IAB-node.

In the above embodiments, in an F1 SETUP REQUEST message, a BAP address of the IAB-node may be included; and after receiving the F1 SETUP REQUEST message, the F1-terminating IAB-donor-CU saves the BAP address for the IAB-node.

In the above embodiments, the number of IP addresses allocated by the RRC-terminating IAB-donor-CU for the IAB-node may be one or more, and the IP address(es) is/are anchored at the RRC-terminating IAB-donor-DU.

In some embodiments, the IAB-MT 1401 receives first information transmitted by the RRC-terminating IAB-donor-CU, the first information including identity information of the IAB-node and/or identity information of the RRC-terminating IAB-donor; and the IAB-DU 1402 transmits second information related to the first information to the F1-terminating IAB-donor.

In the above embodiments, the identity information of the IAB-node may be a UE XnAP ID generated by the RRC-terminating IAB-donor for the IAB-node; the identity information of the RRC-terminating IAB-donor may be base station identity information of the RRC-terminating IAB-donor-CU.

In the above embodiments, the first information may include the identity information of the IAB-node and the identity information of the RRC-terminating IAB-donor, the second information is the same as the first information; or, the first information may include the identity information of the IAB-node; the second information includes a serving cell identity NCGI of the MT of the IAB-node and the identity information of the IAB-node.

In the above embodiments, the first information may be explicitly included in an RRC reconfiguration message or is included in a container of the RRC reconfiguration message.

In the above embodiments, the RRC reconfiguration message may include a first IE in which the first information is included; or, a bap-Config IE of the RRC reconfiguration message may include a second IE or a first field, in which the first information is included.

In the above embodiments, the second information may be explicitly included in an F1AP message or is included in a container of the F1AP message.

In the above embodiments, the F1AP message may be an F1 SETUP REQUEST message.

In the above embodiments, the F1AP message may include a third IE in which the second information is included.

In some embodiments, the IAB-MT 1401 transmits a first RRC message to the RRC-terminating IAB-donor-CU, the first RRC message including the identity information of the F1-terminating IAB-donor, so that the RRC-terminating IAB-donor transmits the identity information of the IAB-node to the F1-terminating IAB-donor.

In the above embodiments, the first RRC message may be a UEAssistanceInformation message; the UEAssistanceInformation message may include a fourth IE, the fourth IE may include the identity information of the F1-terminating IAB-donor.

In the above embodiments, the IAB-MT 1401 may initiate a UE assistance information reporting procedure after the F1 setup between the IAB-DU 1402 and the F1-terminating IAB-donor is completed; wherein the IAB-node has a capability of providing the identity information of the F1-terminating IAB-donor, and the IAB-node is configured with capability reporting, and the IAB-node is in an RRC connected state.

In the above embodiments, the RRC-terminating IAB-donor-CU may transmit a first Xn message to the F1-terminating IAB-donor, the first Xn message including a UE XnAP ID generated by the RRC-terminating IAB-donor for the IAB-node and/or a BAP address of the IAB-node.

In the above embodiments, the RRC-terminating IAB-donor-CU may receive a second Xn message transmitted by the F1-terminating IAB-donor, the second Xn message including acknowledgment information.

In some embodiments, the IAB-MT 1401 transmits an RRC setup complete message to the RRC-terminating IAB-donor, the RRC setup complete message including third information, the third information indicating a mobile IAB capability of the IAB-node, so that the RRC-terminating IAB-donor selects an AMF that supports mobile IAB.

In some embodiments, the IAB-MT 1401 receives a broadcast message transmitted by an RRC-terminating IAB-donor, the broadcast message indicating a cell that supports mobile IAB; the IAB-MT 1401 performs cell selection according to the broadcast message.

FIG. 15 is another schematic diagram of an apparatus for IAB-node integration in the embodiments of the present disclosure, the apparatus e.g. may be an IAB-donor in an IAB network, or may be a component or component(s) or assemblies configured in the IAB-donor. The IAB-donor corresponds to the RRC-terminating IAB-donor in FIG. 2, i.e., the IAB-donor 1. The contents same as those in the embodiments of the first aspect are not repeated again.

As shown in FIG. 15, the apparatus 1500 for IAB-node integration comprises: a central unit (IAB-donor-CU1) 1501 and a distributed unit (IAB-donor-DU1) 1502.

In the above embodiments, the IAB-donor-CU1 1501 transmits first information to the MT of the IAB-node, the first information including identity information of the IAB-node and/or identity information of the RRC-terminating IAB-donor, so that the DU of the IAB-node transmits second information related to the first information to the F1-terminating IAB-donor.

In the above embodiments, the identity information of the IAB-node may be a UE XnAP ID generated by the RRC-terminating IAB-donor for the IAB-node; the identity information of the RRC-terminating IAB-donor may be base station identity information of the RRC-terminating IAB-donor-CU.

In the above embodiments, the first information may include the identity information of the IAB-node and the identity information of the RRC-terminating IAB-donor, the second information is the same as the first information; or, the first information may include the identity information of the IAB-node, the second information includes a serving cell identity NCGI of the MT of the IAB-node and the identity information of the IAB-node.

In the above embodiments, the first information may be explicitly included in an RRC reconfiguration message or is included in a container of the RRC reconfiguration message.

In the above embodiments, the RRC reconfiguration message may include a first IE in which the first information is included; or, a *bap-Config* IE of the RRC reconfiguration message may include a second IE or a first field, in which the first information is included.

In some other embodiments, the IAB-donor-CU1 1501 receives a first RRC message transmitted by the MT of the IAB-node, the first RRC message including the identity information of the F1-terminating IAB-donor; and the IAB-donor-CU1 1501 transmits the identity information of the IAB-node to the F1-terminating IAB-donor according to the first RRC message.

In the above embodiments, the first RRC message may be a UEAssistanceInformation message; the UEAssistanceInformation message may include a fourth IE in which the identity information of the F1-terminating IAB-donor is included.

In the above embodiments, the IAB-donor-CU1 1501 may transmit a first Xn message to the F1-terminating IAB-donor, the first Xn message including a UE XnAP ID generated by the RRC-terminating IAB-donor for the IAB-node and/or a BAP address of the IAB-node.

In the above embodiments, the IAB-donor-CU1 1501 may further receive a second Xn message transmitted by the F1-terminating IAB-donor, the second Xn message including acknowledgment information.

In some embodiments, the RRC-terminating IAB-donor-CU is different from the F1-terminating IAB-donor-CU.

In some embodiments, the IAB-donor-CU1 1501 allocates one or more IP addresses for the IAB-node, so that the IAB-node initiates TNL establishment and F1 setup procedures with the F1-terminating IAB-donor-CU according to the IP address(es).

In the above embodiments, the IP address(es) is/are anchored at the RRC-terminating IAB-donor-DU.

In some embodiments, the IAB-donor-CU1 1501 receives an RRC setup complete message transmitted by the MT of the IAB-node, the RRC setup complete message including third information, the third information indicating a mobile IAB capability of the IAB-node; the IAB-donor-CU1 1501 selects an AMF that supports mobile IAB according to the third information.

In some embodiments, the IAB-donor-CU1 1501 transmits a broadcast message, the broadcast message indicating a cell that supports mobile IAB, so that the IAB-node performs cell selection according to the broadcast message after receiving the broadcast message.

FIG. 16 is another schematic diagram of an apparatus for IAB-node integration in the embodiments of the present disclosure, the apparatus e.g. may be an IAB-donor in an IAB network, or may be a component or component(s) or assemblies configured in the IAB-donor. The IAB-donor corresponds to the F1-terminating IAB-donor in FIG. 2, i.e., the IAB-donor 2. The contents same as those in the embodiments of the first aspect are not repeated again.

As shown in FIG. 16, the apparatus 1600 for IAB-node integration comprises: a central unit (IAB-donor-CU2) 1601 and a distributed unit (IAB-donor-DU2) 1602.

In some embodiments, the IAB-donor-CU2 1601 receives second information transmitted by a DU of the IAB-node, the second information being related to first information, the first information including identity information of the IAB-node and/or identity information of the RRC-terminating IAB-donor.

In the above embodiments, the identity information of the IAB-node is a UE XnAP ID generated by the RRC-terminating IAB-donor for the IAB-node; the identity information of the RRC-terminating IAB-donor is base station identity information of the RRC-terminating IAB-donor-CU.

In the above embodiments, the first information includes the identity information of the IAB-node and the identity information of the RRC-terminating IAB-donor, the second information is the same as the first information; or, the first information includes the identity information of the IAB-node; the second information includes a serving cell identity NCGI of the MT of the IAB-node and the identity information of the IAB-node.

In the above embodiments, the second information is explicitly included in an F1AP message or is included in a container of the F1AP message.

In the above embodiments, the F1AP message may be an F1 SETUP REQUEST message.

In the above embodiments, the F1AP message may include a third IE in which the second information is included.

In some embodiments, the IAB-donor-CU2 1601 receives an F1 SETUP REQUEST message transmitted by the DU of the IAB-node, the F1 SETUP REQUEST message including the BAP address of the IAB-node; the IAB-donor-CU2 saves the BAP address for the IAB-node.

In some embodiments, the IAB-donor-CU2 1601 receives a first Xn message transmitted by the RRC-terminating IAB-donor-CU, the first Xn message including a UE XnAP ID generated by the RRC-terminating IAB-donor for the IAB-node and/or a BAP address of the IAB-node.

In the above embodiments, the IAB-donor-CU2 1601 may further transmit a second Xn message to the RRC-terminating IAB-donor-CU, the second Xn message including acknowledgment information.

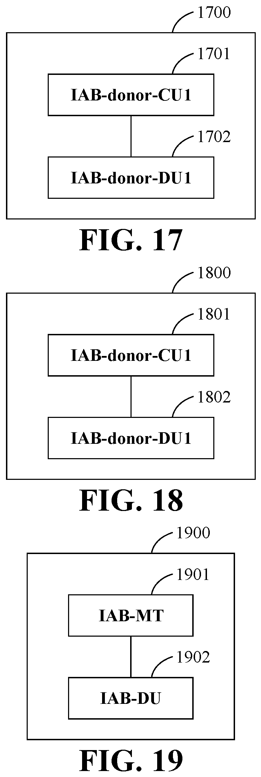

FIG. 17 is another schematic diagram of an apparatus for IAB-node integration in the embodiments of the present disclosure, the apparatus e.g. may be an IAB-donor in an IAB network, or may be a component or component(s) or assemblies configured in the IAB-donor. The IAB-donor corresponds to the RRC-terminating IAB-donor in FIG. 2, i.e., the IAB-donor 1. The contents same as those in the embodiments of the second aspect are not repeated again.

As shown in FIG. 17, the apparatus 1700 for IAB-node integration comprises: a central unit (IAB-donor-CU1) 1701 and a distributed unit (IAB-donor-DU1) 1702.

In the embodiments of the present disclosure, the IAB-donor-CU1 1701 determines a base station identity of the F1-terminating IAB-donor-CU; transmits the base station identity of the F1-terminating IAB-donor-CU to an MT of the IAB-node, so that a DU of the IAB-node performs F1 setup with the F1-terminating IAB-donor-CU according to the base station identity.

In some embodiments, that the IAB-donor-CU1 1701 determines a base station identity of the F1-terminating IAB-donor comprises:
the IAB-donor-CU1 1701 is configured by an OAM with the base station identity of the F1-terminating IAB-donor; or
the IAB-donor-CU1 1701 selects the F1-terminating IAB-donor according to information obtained based on an ANR functionality, thereby to obtain the base station identity of the F1-terminating IAB-donor.

In the above embodiments, the OAM may configure a plurality of base station identities, and the IAB-donor-CU1 1701 selects one base station identity from the plurality of base station identities according to a predetermined strategy.

In the above embodiments, the OAM may further configure priorities of the plurality of base station identities, and the IAB-donor-CU1 1701 selects a base station identity with the highest priority among the plurality of base station identities.

In some embodiments, the IAB-donor-CU1 1701 transmits the base station identity of the F1-terminating IAB-donor to the MT of the IAB-node via an RRC reconfiguration message.

In the above embodiments, the DU of the IAB-node may perform F1 setup with the F1-terminating IAB-donor-CU according to the base station identity and a TNL address of the F1-terminating IAB-donor-CU discovered via the base station identity.

In the above embodiments, the IAB-donor-CU1 1701 may further transmit the TNL address of the F1-terminating IAB-donor-CU to the MT of the IAB-node via the RRC reconfiguration message; the DU of the IAB-node performs F1 setup with the F1-terminating IAB-donor-CU according to the base station identity and the TNL address.

In the above embodiments, the RRC reconfiguration message may include a fifth IE, the fifth IE including the base station identity of the F1-terminating IAB-donor; or, a bap-Config IE of the RRC reconfiguration message may include a sixth IE or a second field, in which the base station identity is included.

In some embodiments, the IAB-donor-CU1 1701 transmits a first Xn message to the F1-terminating IAB-donor, the first Xn message including a UE XnAP ID generated by the RRC-terminating IAB-donor for the IAB-node and/or a BAP address of the IAB-node.

In the above embodiments, the IAB-donor-CU1 1701 may further receive a second Xn message transmitted by the F1-terminating IAB-donor, the second Xn message including acknowledgment information.

In some embodiments, the IAB-donor-CU1 1701 allocates one or more IP addresses for the IAB-node, and the IP address(es) is/are anchored at the RRC-terminating IAB-donor-DU.

In some embodiments, the IAB-donor-CU1 1701 receives an RRC setup complete message transmitted by the MT of the IAB-node, the RRC setup complete message including third information, the third information indicating a mobile IAB capability of the IAB-node; the IAB-donor-CU1 1701 selects an AMF that supports mobile IAB according to the third information.

In some embodiments, the IAB-donor-DU1 1702 transmits a broadcast message, the broadcast message indicating a cell that supports mobile IAB, so that the IAB-node performs cell selection according to the broadcast message.

FIG. 18 is another schematic diagram of an apparatus for IAB-node integration in the embodiments of the present disclosure, the apparatus e.g. may be an IAB-donor in an IAB network, or may be a component or component(s) or assemblies configured in the IAB-donor. The IAB-donor corresponds to the F1-terminating IAB-donor in FIG. 2, i.e., the IAB-donor 2. The contents same as those in the embodiments of the second aspect are not repeated again.

As shown in FIG. 18, the apparatus 1800 for IAB-node integration comprises: a central unit (IAB-donor-CU1) 1801 and a distributed unit (IAB-donor-DU1) 1802.

In the embodiments of the present disclosure, the IAB-donor-CU1 1801 receives a first Xn message transmitted by the RRC-terminating IAB-donor-CU, the first Xn message including a UE XnAP ID generated by the RRC-terminating IAB-donor for the IAB-node and/or a BAP address of the IAB-node.

In some embodiments, the IAB-donor-CU1 1801 further transmits a second Xn message to the RRC-terminating IAB-donor-CU, the second Xn message including acknowledgment information.

The embodiments of the present disclosure provide a setting apparatus. The apparatus e.g. may be an IAB-node in an IAB network, or may be a component or component(s) or assemblies configured in the IAB-node. The IAB-node corresponds to the IAB-node 1 in FIG. 2. The contents same as those in the embodiments of the first aspect to the third aspect are not repeated again.

FIG. 19 is a schematic diagram of a setting apparatus in the embodiments of the present disclosure, as shown in FIG. 19, the apparatus 1900 comprises: a mobile termination (IAB-MT) 1901 and a distributed unit (IAB-DU) 1902.

In the embodiments of the present disclosure, the IAB-MT 1901 transmits an RRC setup complete message to the RRC-terminating IAB-donor, the RRC setup complete message including third information, the third information indicating a mobile IAB capability of the IAB-node, so that the RRC-terminating IAB-donor selects an AMF that supports mobile IAB.

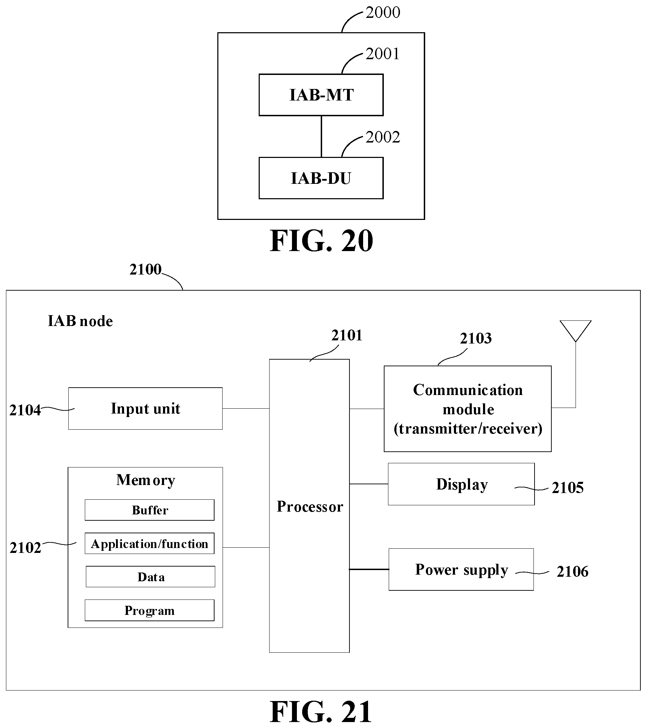

FIG. 20 is another schematic diagram of a setting apparatus in the embodiments of the present disclosure, as shown in FIG. 20, the apparatus 2000 comprises: a mobile termination (IAB-MT) 2001 and a distributed unit (IAB-DU) 2002.

In the embodiments of the present disclosure, the IAB-MT 2001 receives a broadcast message transmitted by an RRC-terminating IAB-donor, the broadcast message indicating a cell that supports mobile IAB; the IAB-MT 2001 performs cell selection according to the broadcast message.

In some embodiments, the broadcast message is a SIB message, the present disclosure is not limited thereto.

It's worth noting that the above only describes components or modules related to the present disclosure, but the present disclosure is not limited thereto. The apparatuses 1400 to 2000 in the embodiments of the present disclosure may further comprise other components or modules. For detailed contents of these components or modules, relevant technologies may be referred to.

Moreover, for the sake of simplicity, FIG. 14 to FIG. 20 only exemplarily show a connection relationship or signal direction between components or modules, however persons skilled in the art should know that various relevant technologies such as bus connection may be used. The above components or modules may be implemented via a hardware facility such as a processor, a memory, a transmitter, a receiver, etc. The embodiments of the present disclosure have no limitations thereto.

According to the apparatus in the embodiments of the present disclosure, a problem of IAB-node integration is solved, so that the IAB-MT and a collocated IAB-DU are able to be integrated onto different donor-CUs, which improves flexibility of a network configuration.

### Embodiments of a fifth aspect

The embodiments of the present disclosure provide an IAB communication system, comprising an IAB-node and an IAB-donor node, the IAB-node is configured to perform the method performed by the IAB-node in the embodiments of any one of the first to third aspects, and the IAB-donor node is configured to perform the method performed by the IAB-donor 1 or IAB-donor 2 in the embodiments of any one of the first to third aspects. The specific behaviors of the IAB-node and the IAB-donor node have been described in detail in the embodiments of the first to third aspects, their contents are incorporated here and will not be elaborated.

Embodiments of the present disclosure further provide an IAB-node, comprising a memory and a processor, the memory storing a computer program, and the processor being configured to perform the method performed by the IAB-node in the embodiments of any one of the first to third aspects.

FIG. 21 is a schematic diagram of an IAB-node in the embodiments of the present disclosure. As shown in FIG. 14, the IAB-node 2100 may comprise a processor 2101 and a memory 2102; the memory 2102 stores data and programs, and is coupled to the processor 2101. It's worth noting that this figure is exemplary; other types of structures may further be used to supplement or replace this structure, so as to implement a telecommunication function or other functions.

For example, the processor 2101 may be configured to execute a program to implement the method performed by the IAB-node in the embodiments of any one of the first to third aspects.

As shown in FIG. 21, the IAB-node 2100 may further comprise: a communication module 2103, an input unit 2104, a display 2105 and a power supply 2106. The functions of said components are similar to related arts, which are not elaborated here. It's worth noting that the IAB-node 2100 does not have to comprise all the components shown in FIG. 21, said components are not indispensable. Moreover, the IAB-node 2100 may further comprise components not shown in FIG. 21, related arts may be referred to.

Embodiments of the present disclosure further provide an IAB-donor node, comprising a memory and a processor, the memory storing a computer program, and the processor being configured to perform the method performed by the IAB-donor 1 or IAB-donor 2 in the embodiments of any one of the first to third aspects.

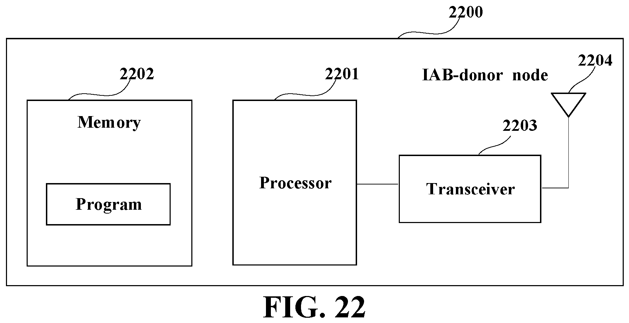

FIG. 22 is a schematic diagram of an IAB-donor node in the embodiments of the present disclosure. As shown in FIG. 22, the IAB-donor node 2200 may comprise: a central processing unit (CPU) 2201 and a memory 2202; the memory 2202 is coupled to the central processing unit 2201. The memory 2202 may store various data; moreover, also stores a program for information processing, and executes the program under the control of the processor 2201, so as to receive various information transmitted by the IAB-node and transmit various information to the IAB-node.

For example, the processor 2201 may be configured to execute a program to implement the method performed by the IAB-donor 1 or IAB-donor 2 in the embodiments of any one of the first to third aspects.

In addition, as shown in FIG. 22, the IAB-donor node 2200 may further comprise: a transceiver 2203 and an antenna 2204, etc.; wherein the functions of said components are similar to related arts, which are not elaborated here. It's worth noting that the IAB-donor node 2200 does not have to comprise all the components shown in FIG. 22. Moreover, the IAB-donor node 2200 may further comprise components not shown in FIG. 22, related arts may be referred to.

Embodiments of the present disclosure further provide a computer readable program, wherein when the program is executed in an IAB-node, the program enables a computer to execute the method performed by the IAB-node in the embodiments of any one of the first to third aspects, in the IAB-node.

Embodiments of the present disclosure further provide a storage medium in which a computer readable program is stored, wherein the computer readable program enables a computer to execute the method performed by the IAB-node in the embodiments of any one of the first to third aspects, in the IAB-node.

Embodiments of the present disclosure further provide a computer readable program, wherein when the program is executed in an IAB-donor node, the program enables a computer to execute the method performed by the IAB-donor 1 or IAB-donor 2 in the embodiments of any one of the first to third aspects, in the IAB-donor node.

Embodiments of the present disclosure further provide a storage medium in which a computer readable program is stored, wherein the computer readable program enables a computer to execute the method performed by the IAB-donor 1 or IAB-donor 2 in the embodiments of any one of the first to third aspects, in the IAB-donor node.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. An method for IAB-node integration, applicable to the IAB-node, the IAB-node comprising an MT (mobile termination) and a DU (distributed unit), wherein the method comprises:
   the DU of the IAB-node is configured by an OAM or the MT of the IAB-node is configured by an RRC-terminating IAB-donor-CU with a base station identity of an F1-terminating IAB-donor-CU; and
   the DU of the IAB-node performs F1 setup with the F1-terminating IAB-donor-CU according to the base station identity.
2. The method according to supplement 1, wherein,
   the RRC-terminating IAB-donor-CU is different from the F1-terminating IAB-donor-CU.
3. The method according to supplement 1, wherein the method further comprises:
   the DU of the IAB-node discovers a TNL address of the F1-terminating IAB-donor-CU via the base station identity; and
   the DU of the IAB-node performs F1 setup with the F1-terminating IAB-donor-CU according to the base station identity and the TNL address.
4. The method according to supplement 1, wherein,
   the DU of the IAB-node is further configured by the OAM with the TNL address of the F1-terminating IAB-donor-CU; and
   the DU of the IAB-node performs F1 setup with the F1-terminating IAB-donor-CU according to the base station identity and the TNL address.
5. The method according to supplement 1, wherein,
   the OAM configures a plurality of base station identities, and
   the DU of the IAB-node selects one base station identity from the plurality of base station identities according to a predetermined strategy, to perform F1 setup.
6. The method according to supplement 5, wherein,
   the OAM further configures priorities of the plurality of base station identities, and
   the DU of the IAB-node selects a base station identity with the highest priority among the plurality of base station identities, to perform F1 setup.
7. The method according to supplement 1, wherein the method further comprises:
   the DU of the IAB-node initiates TNL establishment and F1 setup procedures with the F1-terminating IAB-donor-CU by using IP address(es) allocated by the RRC-terminating IAB-donor-CU for the IAB-node.
8. The method according to supplement 7, wherein,
   in an F1 SETUP REQUEST message, a BAP address of the IAB-node is included; and
   after receiving the F1 SETUP REQUEST message, the F1-terminating IAB-donor-CU saves the BAP address for the IAB-node.
9. The method according to supplement 7, wherein,
   the number of IP addresses allocated by the RRC-terminating IAB-donor-CU for the IAB-node is one or more, and the IP address(es) is/are anchored at the RRC-terminating IAB-donor-DU.
10. The method according to any one of supplements 1-9, wherein,
   the MT of the IAB-node receives first information transmitted by the RRC-terminating IAB-donor-CU, the first information including identity information of the IAB-node and/or identity information of the RRC-terminating IAB-donor; and
   the DU of the IAB-node transmits second information related to the first information to the F1-terminating IAB-donor.
11. The method according to supplement 10, wherein,
   the identity information of the IAB-node is a UE XnAP ID generated by the RRC-terminating IAB-donor for the IAB-node; and
   the identity information of the RRC-terminating IAB-donor is base station identity information of the RRC-terminating IAB-donor-CU.
12. The method according to supplement 10, wherein,
   the first information includes the identity information of the IAB-node and the identity information of the RRC-terminating IAB-donor, and the second information is the same as the first information; or,
   the first information includes the identity information of the IAB-node; the second information includes a serving cell identity NCGI of the MT of the IAB-node and the identity information of the IAB-node.
13. The method according to any one of supplements 10-12, wherein,
   the first information is explicitly included in an RRC reconfiguration message or is included in a container of the RRC reconfiguration message.
14. The method according to supplement 13, wherein,
   the RRC reconfiguration message includes a first IE, the first IE including the first information; or,
   a bap-Config IE of the RRC reconfiguration message includes a second IE or a first field, the second IE or the first field including the first information.
15. The method according to any one of supplements 10-12, wherein,
   the second information is explicitly included in an F1AP message or is included in a container of the F1AP message.
16. The method according to supplement 15, wherein,
   the F1AP message is an F1 SETUP REQUEST message.
17. The method according to supplement 15, wherein,
   the F1AP message includes a third IE, the third IE including the second information.
18. The method according to any one of supplements 1-9, wherein,
   the MT of the IAB-node transmits a first RRC message to the RRC-terminating IAB-donor-CU, the first RRC message including the identity information of the F1-terminating IAB-donor, so that the RRC-terminating IAB-donor transmits the identity information of the IAB-node to the F1-terminating IAB-donor.
19. The method according to supplement 18, wherein,
   the first RRC message is a UEAssistanceInformation message; and
   the UEAssistanceInformation message includes a fourth IE, the fourth IE including the identity information of the F1-terminating IAB-donor.
20. The method according to supplement 18, wherein the method further comprises:
   the MT of the IAB-node initiates a UE assistance information reporting procedure after the F1 setup between the DU of the IAB-node and the F1-terminating IAB-donor is completed;
   wherein the IAB-node has a capability of providing the identity information of the F1-terminating IAB-donor, and the IAB-node is configured with capability reporting, and the IAB-node is in an RRC connected state.
21. The method according to supplement 18, wherein,
   the RRC-terminating IAB-donor-CU transmits a first Xn message to the F1-terminating IAB-donor, the first Xn message including a UE XnAP ID generated by the RRC-terminating IAB-donor for the IAB-node and/or a BAP address of the IAB-node.
22. The method according to supplement 21, wherein,
   the RRC-terminating IAB-donor-CU receives a second Xn message transmitted by the F1-terminating IAB-donor, the second Xn message including acknowledgment information.
23. The method according to any one of supplements 1-22, wherein the method further comprises:
   the MT of the IAB-node transmits an RRC setup complete message to the RRC-terminating IAB-donor, the RRC setup complete message including third information, the third information indicating a mobile IAB capability of the IAB-node, so that the RRC-terminating IAB-donor selects an AMF that supports mobile IAB.
24. The method according to any one of supplements 1-22, wherein the method further comprises:
   the MT of the IAB-node receives a broadcast message transmitted by the RRC-terminating IAB-donor, the broadcast message indicating a cell that supports mobile IAB; and
   the IAB-node performs cell selection according to the broadcast message.
25. A method for IAB-node integration, applicable to an RRC-terminating IAB-donor, the RRC-terminating IAB-donor comprising a CU and a DU, wherein the method comprises:
   the RRC-terminating IAB-donor transmits first information to the MT of the IAB-node, the first information including identity information of the IAB-node and/or identity information of the RRC-terminating IAB-donor, so that the DU of the IAB-node transmits second information related to the first information to the F1-terminating IAB-donor.
26. The method according to supplement 25, wherein,
   the identity information of the IAB-node is a UE XnAP ID generated by the RRC-terminating IAB-donor for the IAB-node; and
   the identity information of the RRC-terminating IAB-donor is base station identity information of the RRC-terminating IAB-donor-CU.
27. The method according to supplement 25, wherein,
   the first information includes the identity information of the IAB-node and the identity information of the RRC-terminating IAB-donor, and the second information is the same as the first information; or,
   the first information includes the identity information of the IAB-node; the second information includes a serving cell identity NCGI of the MT of the IAB-node and the identity information of the IAB-node.
28. The method according to any one of supplements 25-27, wherein,
   the first information is explicitly included in an RRC reconfiguration message or is included in a container of the RRC reconfiguration message.
29. The method according to supplement 28, wherein,
   the RRC reconfiguration message includes a first IE, the first IE including the first information; or,
   *a bap-Config* IE of the RRC reconfiguration message includes a second IE or a first field, the second IE or the first field including the first information.
30. A method for IAB-node integration, applicable to an RRC-terminating IAB-donor, the RRC-terminating IAB-donor comprising a CU and a DU, wherein the method further comprises:
   the RRC-terminating IAB-donor-CU receives a first RRC message transmitted by the MT of the IAB-node, the first RRC message including identity information of the F1-terminating IAB-donor; and
   the RRC-terminating IAB-donor transmits identity information of the IAB-node to the F1-terminating IAB-donor according to the first RRC message.
31. The method according to supplement 30, wherein,
   the first RRC message is a UEAssistanceInformation message; and
   the UEAssistanceInformation message includes a fourth IE, the fourth IE including the identity information of the F1-terminating IAB-donor.
32. The method according to supplement 30 or 31, wherein the method further comprises:
   the RRC-terminating IAB-donor-CU transmits a first Xn message to the F1-terminating IAB-donor, the first Xn message including a UE XnAP ID generated by the RRC-terminating IAB-donor for the IAB-node and/or a BAP address of the IAB-node.
33. The method according to supplement 32, wherein,
   the RRC-terminating IAB-donor-CU receives a second Xn message transmitted by the F1-terminating IAB-donor, the second Xn message including acknowledgment information.
34. The method according to any one of supplements 25-33, wherein,
   the RRC-terminating IAB-donor-CU is different from the F1-terminating IAB-donor-CU.
35. The method according to any one of supplements 25-33, wherein the method further comprises:
   the RRC-terminating IAB-donor-CU allocates one or more IP addresses for the IAB-node, so that the IAB-node initiates TNL establishment and F1 setup procedures with the F1-terminating IAB-donor-CU by using the IP address(es).
36. The method according to supplement 35, wherein,
   the IP address(es) is/are anchored at the RRC-terminating IAB-donor-DU.
37. The method according to any one of supplements 25-36, wherein the method further comprises:
   the RRC-terminating IAB-donor receives the RRC setup complete message transmitted by the MT of the IAB-node, the RRC setup complete message including third information, the third information indicating a mobile IAB capability of the IAB-node; and
   the RRC-terminating IAB-donor selects an AMF that supports mobile IAB according to the third information.
38. The method according to any one of supplements 25-36, wherein the method further comprises:
   the RRC-terminating IAB-donor transmits a broadcast message, the broadcast message indicating a cell that supports mobile IAB, so that the IAB-node performs cell selection according to the broadcast message after receiving the broadcast message.
39. A method for IAB-node integration, applicable to an F1-terminating IAB-donor, the F1-terminating IAB-donor comprising a CU and a DU, wherein the method comprises:
   the F1-terminating IAB-donor receives second information transmitted by the DU of the IAB-node, the second information being related to first information, the first information including identity information of the IAB-node and/or identity information of the RRC-terminating IAB-donor.
40. The method according to supplement 39, wherein,
   the identity information of the IAB-node is a UE XnAP ID generated by the RRC-terminating IAB-donor for the IAB-node; and
   the identity information of the RRC-terminating IAB-donor is base station identity information of the RRC-terminating IAB-donor-CU.
41. The method according to supplement 39, wherein,
   the first information includes the identity information of the IAB-node and the identity information of the RRC-terminating IAB-donor, and the second information is the same as the first information; or,
   the first information includes the identity information of the IAB-node; the second information includes a serving cell identity NCGI of the MT of the IAB-node and the identity information of the IAB-node.
42. The method according to supplement 39, wherein,
   the second information is explicitly included in an F1AP message or is included in a container of the F1AP message.
43. The method according to supplement 42, wherein,
   the F1AP message is an F1 SETUP REQUEST message.
44. The method according to supplement 42, wherein,
   the F1AP message includes a third IE, the third IE including the second information.
45. The method according to supplement 39, wherein the method further comprises:
   the F1-terminating IAB-donor-CU receives an F1 SETUP REQUEST message transmitted by the DU of the IAB-node, the F1 SETUP REQUEST message including the BAP address of the IAB-node; and
   the F1-terminating IAB-donor saves the BAP address for the IAB-node.
46. A method for IAB-node integration, applicable to an RRC-terminating IAB-donor, the RRC-terminating IAB-donor comprising a CU (central unit) and a DU (distributed unit), wherein the method comprises:
   an RRC-terminating IAB-donor-CU determines a base station identity of an F1-terminating IAB-donor-CU for an IAB-node; and
   the RRC-terminating IAB-donor-CU transmits the base station identity of the F1-terminating IAB-donor-CU to an MT of the IAB-node, so that a DU of the IAB-node performs F1 setup with the F1-terminating IAB-donor-CU according to the base station identity.
47. The method according to supplement 46, wherein that the RRC-terminating IAB-donor-CU determines a base station identity of the F1-terminating IAB-donor for the IAB-node comprises:
   the RRC-terminating IAB-donor-CU is configured by an OAM with the base station identity of the F1-terminating IAB-donor; or,
   the RRC-terminating IAB-donor-CU selects the F1-terminating IAB-donor according to information obtained based on an ANR functionality, thereby to obtain the base station identity of the F1-terminating IAB-donor.
48. The method according to supplement 47, wherein,
   the OAM configures a plurality of base station identities, and
   the RRC-terminating IAB-donor-CU selects one base station identity from the plurality of base station identities according to a predetermined strategy.
49. The method according to supplement 48, wherein,
   the OAM further configures priorities of the plurality of base station identities, and
   the RRC-terminating IAB-donor-CU selects a base station identity with the highest priority among the plurality of base station identities.
50. The method according to supplement 46, wherein,
   the RRC-terminating IAB-donor-CU transmits the base station identity of the F1-terminating IAB-donor to the MT of the IAB-node via an RRC reconfiguration message.
51. The method according to supplement 50, wherein,
   the DU of the IAB-node performs F1 setup with the F1-terminating IAB-donor-CU according to the base station identity and the TNL address of the F1-terminating IAB-donor-CU discovered via the base station identity.
52. The method according to supplement 50, wherein,
   the RRC-terminating IAB-donor-CU further transmits the TNL address of the F1-terminating IAB-donor-CU to the MT of the IAB-node via the RRC reconfiguration message; and
   the DU of the IAB-node performs F1 setup with the F1-terminating IAB-donor-CU according to the base station identity and the TNL address.
53. The method according to any one of supplements 50-52, wherein,
   the RRC reconfiguration message includes a fifth IE, the fifth IE including a base station identity of the F1-terminating IAB-donor; or
   a bap-Config IE of the RRC reconfiguration message includes a sixth IE or a second field, the sixth IE or the second field including the base station identity.
53a. The method according to any one of supplements 46-53, wherein the method further comprises:
   the RRC-terminating IAB-donor-CU transmits first information to the MT of the IAB-node, the first information including identity information of the IAB-node and/or identity information of the RRC-terminating IAB-donor, so that the DU of the IAB-node transmits second information related to the first information to the F1-terminating IAB-donor.
53b. The method according to supplement 53a, wherein,
   the identity information of the IAB-node is a UE XnAP ID generated by the RRC-terminating IAB-donor for the IAB-node; and
   the identity information of the RRC-terminating IAB-donor is base station identity information of the RRC-terminating IAB-donor-CU.
53c. The method according to supplement 53a, wherein,
   the first information includes the identity information of the IAB-node and the identity information of the RRC-terminating IAB-donor, and the second information is the same as the first information; or,
   the first information includes the identity information of the IAB-node; the second information includes a serving cell identity NCGI of the MT of the IAB-node and the identity information of the IAB-node.
53d. The method according to any one of supplements 53a-53c, wherein,
   the first information is explicitly included in an RRC reconfiguration message or is included in a container of the RRC reconfiguration message.
53e. The method according to supplement 53d, wherein
   the RRC reconfiguration message includes a first IE, the first IE including the first information; or,
   a bap-Config IE of the RRC reconfiguration message includes a second IE or a first field, the second IE or the first field including the first information.
53f. The method according to any one of supplements 53a-53c, wherein,
   the second information is explicitly included in an F1AP message or is included in a container of the F1AP message.
53g. The method according to supplement 53f, wherein,
   the F1AP message is an F1 SETUP REQUEST message.
53h. The method according to supplement 53f, wherein,
   the F1AP message includes a third IE, the third IE including the second information.
54. The method according to any one of supplements 46-53, wherein the method further comprises:
   the RRC-terminating IAB-donor-CU transmits a first Xn message to the F1-terminating IAB-donor, the first Xn message including a UE XnAP ID generated by the RRC-terminating IAB-donor for the IAB-node and/or a BAP address of the IAB-node.
55. The method according to supplement 54, wherein,
   the RRC-terminating IAB-donor-CU receives a second Xn message transmitted by the F1-terminating IAB-donor, the second Xn message including acknowledgment information.
56. The method according to any one of supplements 46-55, wherein the method further comprises:
   the RRC-terminating IAB-donor-CU allocates one or more IP addresses for the IAB-node, and the IP address(es) is/are anchored at the RRC-terminating IAB-donor-DU.
57. The method according to any one of supplements 46-56, wherein the method further comprises:
   the RRC-terminating IAB-donor receives the RRC setup complete message transmitted by the MT of the IAB-node, the RRC setup complete message including third information, the third information indicating a mobile IAB capability of the IAB-node; and
   the RRC-terminating IAB-donor selects an AMF that supports mobile IAB according to the third information.
58. The method according to any one of supplements 46-56, wherein the method further comprises:
   the RRC-terminating IAB-donor-DU transmits a broadcast message, the broadcast message indicating a cell that supports mobile IAB, so that the IAB-node performs cell selection according to the broadcast message.
59. A method for IAB-node integration, applicable to an F1-terminating IAB-donor, the F1-terminating IAB-donor comprising a CU (central unit) and a DU (distributed unit), wherein the method comprises:
   the F1-terminating IAB-donor receives a first Xn message transmitted by an RRC-terminating IAB-donor-CU, the first Xn message including a UE XnAP ID generated by the RRC-terminating IAB-donor for the IAB-node and/or a BAP address of the IAB-node.
60. The method according to supplement 59, wherein the method further comprises:
   the F1-terminating IAB-donor transmits a second Xn message to the RRC-terminating IAB-donor-CU, the second Xn message including acknowledgment information.
61. A setting method, applicable to an IAB-node, the IAB-node comprising an MT and a DU, wherein the method comprises:
   the MT of the IAB-node transmits an RRC setup complete message to an RRC-terminating IAB-donor, the RRC setup complete message including third information, the third information indicating a mobile IAB capability of the IAB-node, so that the RRC-terminating IAB-donor selects an AMF that supports mobile IAB.
62. A setting method, applicable to an IAB-node, the IAB-node comprising an MT and a DU, wherein the method comprises:
   the MT of the IAB-node receives a broadcast message transmitted by an RRC-terminating IAB-donor, the broadcast message indicating a cell that supports mobile IAB; and
   the MT of the IAB-node performs cell selection according to the broadcast message.
63. The method according to supplement 62, wherein,
   the broadcast message is a SIB message.
64. An IAB-node, comprising a memory and a processor, the memory storing a computer program, and the processor being configured to execute the computer program to implement the method according to any one of the supplements 1-24 and 61-63.
65. An IAB-donor node, comprising a memory and a processor, the memory storing a computer program, and the processor being configured to execute the computer program to implement the method according to any one of the supplements 25-60.
66. An IAB communication system, comprising an IAB-node and an IAB-donor node, the IAB-node being configured to perform the method according to any one of supplements 1-24 and 61-63, and the IAB-donor node being configured to perform the method according to any one of supplements 25-60.

## Claims

1. An apparatus for IAB-node integration, applicable to the IAB-node, the apparatus comprising an IAB-MT (mobile termination) and an IAB-DU (distributed unit), wherein,
the IAB-DU is configured by an OAM or the IAB-MT is configured by an RRC-terminating IAB-donor-CU with a base station identity of an F1-terminating IAB-donor-CU; and
the IAB-DU performs F1 setup with the F1-terminating IAB-donor-CU according to the base station identity.

2. The apparatus according to claim 1, wherein,
the RRC-terminating IAB-donor-CU is different from the F1-terminating IAB-donor-CU.

3. The apparatus according to claim 1, wherein,
the IAB-DU is further configured by the OAM with a TNL address of the F1-terminating IAB-donor-CU; and
the IAB-DU performs F1 setup with the F1-terminating IAB-donor-CU according to the base station identity and the TNL address.

4. The apparatus according to claim 1, wherein,
the IAB-DU initiates TNL establishment and F1 setup procedures with the F1-terminating IAB-donor-CU by using IP address(es) allocated by the RRC-terminating IAB-donor-CU for the IAB-node.

5. The apparatus according to claim 4, wherein,
in an F1 SETUP REQUEST message, a BAP address of the IAB-node is included; and
after receiving the F1 SETUP REQUEST message, the F1-terminating IAB-donor-CU saves the BAP address for the IAB-node.

6. The apparatus according to claim 4, wherein,
the number of IP addresses allocated by the RRC-terminating IAB-donor-CU for the IAB-node is one or more, and the IP address(es) is/are anchored at the RRC-terminating IAB-donor-DU.

7. The apparatus according to claim 1, wherein,
the IAB-MT receives first information transmitted by the RRC-terminating IAB-donor-CU, the first information including identity information of the IAB-node and/or identity information of the RRC-terminating IAB-donor; and
the IAB-DU transmits second information related to the first information to the F1-terminating IAB-donor.

8. The apparatus according to claim 7, wherein,
the identity information of the IAB-node is a UE XnAP ID generated by the RRC-terminating IAB-donor for the IAB-node; and
the identity information of the RRC-terminating IAB-donor is base station identity information of the RRC-terminating IAB-donor-CU.

9. The apparatus according to claim 7, wherein,
the first information includes the identity information of the IAB-node and the identity information of the RRC-terminating IAB-donor, and the second information is the same as the first information; or,
the first information includes the identity information of the IAB-node; the second information includes a serving cell identity NCGI of the IAB-MT and the identity information of the IAB-node.

10. The apparatus according to claim 7, wherein,
the first information is explicitly included in an RRC reconfiguration message or is included in a container of an RRC reconfiguration message.

11. The apparatus according to claim 7, wherein,
the second information is explicitly included in an F1AP message or is included in a container of an F1AP message.

12. The apparatus according to claim 11, wherein,
the F1AP message is an F1 SETUP REQUEST message.

13. The apparatus according to claim 1, wherein,
the IAB-MT transmits a first RRC message to the RRC-terminating IAB-donor-CU, the first RRC message including the identity information of the F1-terminating IAB-donor, so that the RRC-terminating IAB-donor transmits the identity information of the IAB-node to the F1-terminating IAB-donor.

14. The apparatus according to claim 1, wherein the apparatus further comprises:
the IAB-MT transmits an RRC setup complete message to the RRC-terminating IAB-donor, the RRC setup complete message including third information, the third information indicating a mobile IAB capability of the IAB-node, so that the RRC-terminating IAB-donor selects an AMF that supports mobile IAB.

15. The apparatus according to claim 1, wherein the apparatus further comprises:
the IAB-MT receives a broadcast message transmitted by the RRC-terminating IAB-donor, the broadcast message indicating a cell that supports mobile IAB; and
the IAB-MT performs cell selection according to the broadcast message.

16. An apparatus for IAB-node integration, applicable to an RRC-terminating IAB-donor, the apparatus comprising an IAB-donor-CU and an IAB-donor-DU, wherein,
the IAB-donor-CU receives a first RRC message transmitted by an MT of the IAB-node, the first RRC message including identity information of the F1-terminating IAB-donor; and
the IAB-donor-CU transmits identity information of the IAB-node to the F1-terminating IAB-donor according to the first RRC message.

17. The apparatus according to claim 16, wherein,
the first RRC message is a UEAssistanceInformation message; and
the UEAssistanceInformation message includes a fourth IE, the fourth IE including the identity information of the F1-terminating IAB-donor.

18. The apparatus according to claim 16, wherein the apparatus further comprises:
the IAB-donor-CU transmits a first Xn message to the F1-terminating IAB-donor, the first Xn message including a UE XnAP ID generated by the RRC-terminating IAB-donor for the IAB-node and/or a BAP address of the IAB-node.

19. The apparatus according to claim 18, wherein,
the IAB-donor-CU receives a second Xn message transmitted by the F1-terminating IAB-donor, the second Xn message including acknowledgment information.

20. A setting apparatus, applicable to an IAB-node, the apparatus comprising an IAB-MT and an IAB-DU, wherein,
the IAB-MT transmits an RRC setup complete message to an RRC-terminating IAB-donor, the RRC setup complete message including third information, the third information indicating a mobile IAB capability of the IAB-node, so that the RRC-terminating IAB-donor selects an AMF that supports mobile IAB.
